# EUROPEAN PATENT APPLICATION

(11) **EP 2 787 521 A1**
(43) Date of publication of application: **08.10.2014**
(21) Application number: 12854226.3
(22) Date of filing: 28.11.2012
(51) Int. Cl.: H01H 39/00

(54) **CUTTING DEVICE**

(30) Priority: 28.11.2011 JP 2011258503
(71) Applicant: Daikin Industries, Ltd., Osaka 530-8323 (JP)
(72) Inventor: UKON, Tetsuya, Osaka 530-8323 (JP); TSUCHIYA, Teruaki, Osaka 530-8323 (JP); OKUGAWA, Futoshi, Osaka 530-8323 (JP)
(74) Representative: Goddar, Heinz J.
(86) International application number: PCT/JP2012/007648
(87) International publication number: WO 2013/080545

(57) **Abstract**

A cutter (10) prevents movement of a harness being cut. The cutter (10) includes: a first cylindrical member (25) and a second cylindrical member (26) whose axial ends (25c, 26c) face each other, with a predetermined distance therebetween, and sandwich the harness (12) in the axial direction; and a blade (30) accommodated in the first cylindrical member (25) to be slidable in the axial direction and including a cutting portion (31) on a front side and a pusher (32) on a back side. The first cylindrical member (25) includes a back side tapered portion (25d) and a front side tapered portion (25e) at which an inner diameter of the first cylindrical member (25) on an inner surface where the pusher (32) slides is gradually reduced from a back side to a front side.

## Description

### TECHNICAL FIELD

The present invention relates to cutters configured to cut current-carrying members through which current flows.

### BACKGROUND ART

Cutters configured to cut current-carrying members through which current flows have been known. Cutters of this type are used to shut off power from a power supply in disaster situations, for example. Patent Document 1 shows a cutter in which a slidable blade is housed in a cylindrical case, and a current-carrying member is sandwiched between a pair of fixing members of the cylindrical case. In this cutter, the current-carrying member is cut by the blade caused to move (slide) in the cylindrical case by a high-pressure gas generated from a gas-generating agent.

### CITATION LIST

### PATENT DOCUMENT

Patent Document 1: Japanese Unexamined Patent Publication No. 2010-86653

### SUMMARY OF THE INVENTION

### TECHNICAL PROBLEM

However, in the cutter disclosed in Patent Document 1, the current-carrying member is not fixed firmly enough by the fixing members, and therefore, the current-carrying member is pulled and moved, or extended (or deformed) by the blade at the time of cutting with the blade, and cannot be cut smoothly. Thus, the cutting force (the blade's traveling force) is unnecessarily large.

The present invention is thus intended to improve the ability in cutting a current-carrying member.

### SOLUTION TO THE PROBLEM

The first aspect of the present invention includes: a first cylindrical member (25) and a second cylindrical member (26) whose axial ends (25c, 26c) face each other and sandwich a current-carrying member (12) in the axial direction, a blade (30) accommodated in the first cylindrical member (25) so to be slidable in the axial direction, and including a cutting portion (31) on a front side and a pressure receiver (32) on a back side, a gas generator (35) which generates a high-pressure gas that acts on the pressure receiver (32), thereby making the blade (30) slide forward and cut the current-carrying member (12) with the cutting portion (31), and a movement preventing portion which prevents movement of the current-carrying member (12) at a time of cutting the current-carrying member (12) with the cutting portion (31).

In the first aspect of the present invention, a high-pressure gas is generated on the back side of the pressure receiver (32) by the gas generator (35). The pressure of the high-pressure gas acts on the pressure receiver (32), making the pressure receiver (32) and the blade (30) move (slide) forward and cut the current-carrying member (12) with the cutting portion (31). At the cutting, the movement preventing portion prevents movement of the current-carrying member (12).

The second aspect of the present invention is that in the first aspect of the present invention, the movement preventing portion includes a strong pressure portion that increases a force of sandwiching the current-carrying member (12).

In the second aspect of the present invention, movement of the current-carrying member (12) is prevented due to the strong pressure portion which increases a force of sandwiching the current-carrying member (12) at the cutting of the current-carrying member (12) with the cutting portion (31).

The third aspect of the present invention is that in the first aspect of the present invention, the movement preventing portion includes an engagement portion due to which the current-carrying member (12) is caught on at least one of the first cylindrical member (25), the second cylindrical member (26), and the blade (30).

In the third aspect of the present invention, movement of the current-carrying member (12) is prevented due to the engagement portion caught on the first cylindrical member (25), for example, at the cutting of the current-carrying member (12) with the cutting portion (31).

The fourth aspect of the present invention is that in the first aspect of the present invention, the movement preventing portion includes a strong pressure portion that increases a force of sandwiching the current-carrying member (12), and an engagement portion due to which the current-carrying member (12) is caught on at least one of the first cylindrical member (25), the second cylindrical member (26), and the blade (30).

In the fourth aspect of the present invention, movement of the current-carrying member (12) is prevented due to the strong pressure portion which increases a force of sandwiching the current-carrying member (12), and the engagement portion caught on the first cylindrical member (25), for example, at the cutting of the current-carrying member (12) with the cutting portion (31).

The fifth aspect of the present invention is that in the second or fourth aspect of the present invention, the strong pressure portion includes a tapered portion (25d, 25e, 25g) at which an inner diameter of the first cylindrical member (25) on an inner surface where the pressure receiver (32) slides is reduced from a back side to a front side.

In the fifth aspect of the present invention, the sliding resistance (or friction) of the pressure receiver (32) with respect to the first cylindrical member (25) is increased at the cutting of the current-carrying member (12) with the cutting portion (31), because the first cylindrical member (25) includes a tapered portion (25d, 25e, 25g) on its inner surface. The increase in the sliding resistance (or friction) makes the first cylindrical member (25) move forward (i.e., toward the second cylindrical member (26)). Thus, the current-carrying member (12) is strongly pushed toward the second cylindrical member (26) by the first cylindrical member (25).

The sixth aspect of the present invention is that in the second or the fourth aspect of the present invention, at least one of axial ends (25c, 26c) of the first cylindrical member (25) and the second cylindrical member (26), the axial ends (25c, 26c) facing each other, is provided with an insertion groove (25a, 26a) which extends in a radial direction of the cylindrical member (25, 26) and in which the current-carrying member (12) is inserted and sandwiched, and in the case where the insertion groove (25a, 26a) is formed in one of the axial ends (25c, 26c), the insertion groove (25a, 26a) has a depth smaller than a thickness of the current-carrying member (12), and in the case where the insertion groove (25a, 26a) is formed in both of the axial ends (25c, 26c), a sum of depths of the insertion grooves (25a, 26a) is smaller than a thickness of the current-carrying member (12).

In the sixth aspect of the present invention, the depth of the insertion groove (25a, 26a) (a sum of depths of the insertion grooves (25a, 26a)) is smaller than the thickness of the current-carrying member (12). Thus, the current-carrying member (12) is reliably pushed toward the second cylindrical member (26) by the forward movement of the first cylindrical member (25).

The seventh aspect of the present invention is that in the fifth or sixth aspect of the present invention, the first cylindrical member (25) includes the tapered portion (25d, 25e) from a back end to a front end of the first cylindrical member (25), the tapered portion (25d, 25e) includes a back side tapered portion (25d) formed on the back side, and a front side tapered portion (25e) continuous to and located forward of the back side tapered portion (25d) and having a tilt angle smaller than a tilt angle of the back side tapered portion (25d), and the pressure receiver (32) includes a tapered portion (32e) at which an outer diameter of the pressure receiver (32) is reduced from a back side to a front side.

In the seventh aspect of the present invention, the first cylindrical member (25) includes the back side tapered portion (25d), and the pressure receiver (32) includes the tapered portion (32e). Thus, the pressure receiver (32) is reliably press-fitted in the first cylindrical member (25) by the pressure of the high-pressure gas. Further, since the first cylindrical member (25) includes the front side tapered portion (25e) whose tilt angle is smaller than the tilt angle of the back side tapered portion (25d), the sliding resistance (or friction) of the pressure receiver (32) with respect to the first cylindrical member (25) is increased. Thus, the current-carrying member (12) is strongly pushed toward the second cylindrical member (26) by the first cylindrical member (25) due to the increase in the sliding resistance (or friction).

The eighth aspect of the present invention is that in the fifth or sixth aspect of the present invention, the first cylindrical member (25) includes a straight portion (25f) at which the inner diameter of the first cylindrical member (25) is constant on a back side of the inner surface where the pressure receiver (32) slides, and includes the tapered portion (25g) continuous to and located forward of the straight portion (25f), and the pressure receiver (32) includes, at a back end thereof, a tapered portion (32g) at which an outer diameter of the pressure receiver (32) is reduced from a back side to a front side, and includes a straight portion (32h) continuous to and located forward of the tapered portion (32g) and having a constant outer diameter that slides on the straight portion (25f) of the first cylindrical member (25).

In the eighth aspect of the present invention, the pressure receiver (32) includes the tapered portions (32g) on the back end. Thus, the sliding resistance (or friction) between the tapered portion (32g) of the pressure receiver (32) and the straight portion (25f) of the first cylindrical member (25) is increased when the pressure receiver (32) is press-fitted in the first cylindrical member (25). Due to the increase in the sliding resistance (or friction), the current-carrying member (12) is strongly pushed toward the second cylindrical member (26) by the first cylindrical member (25). Further, the first cylindrical member (25) includes the tapered portion (25g) located forward of the straight portion (25f). Thus, the traveling force of the pressure receiver (32) toward the front side is reduced after the current-carrying member (12) is cut with the cutting portion (31). As a result, the forward traveling force of the cutting portion (31) is reduced.

The ninth aspect of the present invention is that in the second or fourth aspect of the present invention, each of the axial ends (25c, 26c) of the first cylindrical member (25) and the second cylindrical member (26) is in an approximately V-shape.

In the ninth aspect of the present invention, each of the axial ends (25c, 26c) of the first cylindrical member (25) and the second cylindrical member (26) is in an approximately V-shape, and therefore, the current-carrying member (12) does not readily slip at the cutting of the current-carrying member (12).

The tenth aspect of the present invention is that in the ninth aspect of the present invention, the current-carrying member (12) is in an approximately V-shape corresponding to the axial ends (25c, 26c) of the first cylindrical member (25) and the second cylindrical member (26).

In the tenth aspect of the present invention, the current-carrying member (12) is in an approximately V-shape, and therefore, the current-carrying member (12) does not readily slip at the cutting of the current-carrying member (12).

The eleventh aspect of the present invention is that in the third or fourth aspect of the present invention, at least one of axial ends (25c, 26c) of the first cylindrical member (25) and the second cylindrical member (26), the axial ends (25c, 26c) facing each other, is provided with an insertion groove (25a, 26a) which extends in a radial direction of the cylindrical member (25, 26) and in which the current-carrying member (12) is inserted and sandwiched, and the engagement portion includes a wider portion (121a) which is formed in the current-carrying member (12), which extends outward in the radial direction from an outward end of the insertion groove (25a, 26a), and which has a width wider than a width of the insertion groove (25a, 26a).

In the eleventh aspect of the present invention, the current-carrying member (12) is sandwiched between the cylindrical members (25, 26) while being inserted in the insertion groove (25a, 26a). Since the current-carrying member (12) includes the wider portion (121a), the current-carrying member (12) is prevented from moving radially inward in the insertion groove (25a, 26a) at the cutting of the current-carrying member (12) with the cutting portion (31). In other words, movement of the current-carrying member (12) is prevented by the wider portion (121a) which has a width greater than the width of the insertion groove (25a, 26a) and is therefore caught on the insertion groove (25a, 26a) even when the current-carrying member (12) is forced to move radially inward in the insertion groove (25a, 26a).

The twelfth aspect of the present invention is that in the third or fourth aspect of the present invention, the cutting portion (31) includes: a pair of guide portions (31c) which face each other and protrude to a front side, and between which the current-carrying member (12) is inserted, and whose outer diameter is approximately equal to inner diameters of the first cylindrical member (25) and the second cylindrical member (26); and an edge portion (31a, 31b) formed between the pair of guide portions (31c) and configured to cut the current-carrying member (12), and the engagement portion includes a wider portion (121a) which is formed in the current-carrying member (12), which extends outward from an end of each of the guide portions (31c) in a direction along which the current-carrying member (12) passes in between the guide portions (31c), and which has a width wider than a distance between the guide portions (31c).

In the twelfth aspect of the present invention, the current-carrying member (12) is sandwiched between the cylindrical members (25, 26) while being inserted in a space between a pair of guide portions (31c). Since the current-carrying member (12) includes a wider portion (121a), movement of the current-carrying member (12) into the space between the pair of guide portions (31c) is prevented at the cutting of the current-carrying member (12) with the cutting portion (31). In other words, movement of the current-carrying member (12) into the space between the pair of guide portions (31c) (movement radially inward of the cylindrical member (25, 26)) is prevented due to the wider portion (121a) which has a width greater than the distance between the guide portions (31c) and is therefore caught on the guide portions (31c).

The thirteenth aspect of the present invention is that in the third or fourth aspect of the present invention, the engagement portion includes a recess (12c) formed in one of the current-carrying member (12) or the axial end (25c, 26c) of the first cylindrical member (25) or the second cylindrical member (26), and a projection (25h) provided on the other one of the current-carrying member (12) or the axial end (25c, 26c) of the first cylindrical member (25) or the second cylindrical member (26), and fitted in the recess (12c).

In the thirteenth aspect of the present invention, a recess (12c) is formed in one of the current-carrying member (12), or the first cylindrical member (25) or the second cylindrical member (26), and a projection (25h) is provided on the other of the current-carrying member (12), or the first cylindrical member (25) or the second cylindrical member (26). Thus, movement of the current-carrying member (12) is prevented due to the projection (25h) caught in the recess (12c).

The fourteenth aspect of the present invention is that in the third or fourth aspect of the present invention, the engagement portion includes a bent portion (12d) formed in the current-carrying member (12) and configured to be caught on an outer circumferential surface of the first cylindrical member (25) or the second cylindrical member (26).

In the fourteenth aspect of the present invention, the current-carrying member (12) includes the bent portion (12d) which prevents movement of the current-carrying member (12) because the bent portion (12d) is caught on the first cylindrical member (25) or the second cylindrical member (26).

The fifteenth aspect of the present invention is that in the third or fourth aspect of the present invention, the engagement portion includes a thick portion (12e) which is formed in the current-carrying member (12), which extends outward in a radial direction of the first cylindrical member (25) from an outward end of the axial end (25c, 26c) of the first cylindrical member (25) or the second cylindrical member (26), and which has a thickness greater than a distance between the first cylindrical member (25) and the second cylindrical member (26).

In the fifteenth aspect of the present invention, the current-carrying member (12) includes the thick portion (12e). Thus, movement of the current-carrying member (12) is prevented due to the thick portion (12e) caught on the first cylindrical member (25) or the second cylindrical member (26).

### ADVANTAGES OF THE INVENTION

The present invention includes a movement preventing portion which prevents movement of the current-carrying member (12). Thus, movement of the current-carrying member (12) at the time of cutting is prevented. As a result, the current-carrying member (12) can be smoothly cut. In other words, cutting ability increases.

According to the second aspect of the present invention, the strong pressure portion increases a force of sandwiching the current-carrying member (12). Thus, movement of the current-carrying member (12) can be prevented.

According to the third aspect of the present invention, the engagement portion is caught on the first cylindrical member (25), for example. Thus, movement of the current-carrying member (12) can be prevented.

According to the fourth aspect of the present invention, the strong pressure portion increases a force of sandwiching the current-carrying member (12), and the engagement portion is caught on the first cylindrical member (25), for example. Thus, movement of the current-carrying member (12) can be reliably prevented.

According to the fifth aspect of the present invention, the first cylindrical member (25) includes the tapered portion (25d, 25e, 25g) at which the inner diameter is reduced from the back side to the front side. It is therefore possible to increase the sliding resistance (or friction) between the pressure receiver (32) and the first cylindrical member (25). In this structure, the first cylindrical member (25) is caused to move forward (i.e., toward the second cylindrical member (26)). As a result, it is possible to increase the force of sandwiching the current-carrying member (12) between the first cylindrical member (25) and the second cylindrical member (26). It is therefore possible to firmly fix (hold) the current-carrying member (12). Thus, the current-carrying member (12) can be prevented from moving forward or being extended at the time of cutting, which allows the current-carrying member (12) to be cut smoothly.

In the sixth aspect of the present invention, the depth of the insertion groove (25a, 26a) (a sum of the depths of the insertion grooves (25a, 26a)) is set to be smaller than the thickness of the current-carrying member (12). Thus, the current-carrying member (12) can be reliably pushed toward the second cylindrical member (26) by the first cylindrical member (25) when the first cylindrical member (25) is caused to move forward (i.e., toward the second cylindrical member (26)) by the sliding resistance (or friction) of the pressure receiver (32). It is therefore possible to reliably increase the force of sandwiching the current-carrying member (12) between the first cylindrical member (25) and the second cylindrical member (26), and the current-carrying member (12) can be firmly held.

According to the seventh aspect of the present invention, the first cylindrical member (25) includes the back side tapered portion (25d), and the front side tapered portion (25e) of which the tilt angle is smaller than the tilt angle of the back side tapered portion (25d). Further, the pressure receiver (32) includes the tapered portion (32e). These structures allow the pressure receiver (32) to be easily press-fitted into the first cylindrical member (25), and reliably increase the sliding resistance (or friction) between the pressure receiver (32) and the first cylindrical member (25). It is therefore possible to increase the force of sandwiching the current-carrying member (12) between the first cylindrical member (25) and the second cylindrical member (26), and increase the sealing properties between the pressure receiver (32) and the first cylindrical member (25). As a result, cutting ability increases.

According to the eighth aspect of the present invention, the pressure receiver (32) includes the tapered portion (32g) on the back end. It is therefore possible to increase the sliding resistance (or friction) between the pressure receiver (32) and the first cylindrical member (25). As a result, it is possible to increase the force of sandwiching the current-carrying member (12) between the first cylindrical member (25) and the second cylindrical member (26), and increase the sealing properties between the pressure receiver (32) and the first cylindrical member (25). Further, the first cylindrical member (25) includes the tapered portion (25g). Thus, the forward traveling force of the cutting portion (31) after cutting the current-carrying member (12) can be reduced. As a result, it is possible to prevent the collision of the cutting portion (31) with a back side portion of second cylindrical member (26).

According to the ninth aspect of the present invention, the axial ends (25c, 26c) of the first cylindrical member (25) and the second cylindrical member (26) are in an approximately V-shape. Thus, the current-carrying member (12) does not easily slip at the time of cutting. It is therefore possible to further reduce the situation in which the current-carrying member (12) is extended forward at the time of cutting. This further increases the cutting ability.

According to the tenth aspect of the present invention, the current-carrying member (12) is in an approximately V-shape. Thus, the current-carrying member (12) does not easily slip at the time of cutting. It is therefore possible to further reduce the situation in which the current-carrying member (12) is extended forward at the time of cutting. This further increases the cutting ability.

According to the eleventh aspect of the present invention, the current-carrying member (12) is inserted in the insertion groove (25a, 26a), and the current-carrying member (12) is provided with the wider portion (121a) whose width is wider than the width of the insertion groove (25a, 26a), at a radially outward end of the insertion groove (25a, 26a). Therefore, the current-carrying member (12) is prevented from moving radially inward in the insertion groove (25a, 26a) due to the wider portion (121a) caught on the insertion groove (25a, 26a). It is therefore possible to prevent the current-carrying member (12) from moving forward or being extended at the time of cutting, which allows the current-carrying member (12) to be cut smoothly.

According to the twelfth aspect of the present invention, the current-carrying member (12) is inserted in a space between the pair of guide portions (31c) of the cutting portion (31), and the current-carrying member (12) is provided with the wider portion (121a) whose width is wider than the distance between the guide portions (31c), at an outward end of each of the guide portions (31c). It is therefore possible to prevent the current-carrying member (12) from moving into the space between the pair of guide portions (31c), due to the wider portion (121a) caught on the guide portions (31c). Thus, the current-carrying member (12) can be prevented from moving forward or being extended at the time of cutting, which allows the current-carrying member (12) to be cut smoothly.

According to the thirteenth aspect of the present invention, the recess (12c) is formed in one of the current-carrying member (12), or the first cylindrical member (25) or the second cylindrical member (26), and a projection (25h) is provided on the other one of the current-carrying member (12), or the first cylindrical member (25) or the second cylindrical member (26). Thus, movement of the current-carrying member (12) is prevented due to the projection (25h) caught in the recess (12c). Thus, the current-carrying member (12) can be prevented from moving forward or being extended at the time of cutting, which allows the current-carrying member (12) to be cut smoothly.

According to the fourteenth aspect of the present invention, the current-carrying member (12) includes the bent portion (12d). Thus, movement of the current-carrying member (12) is prevented due to the bent portion (12d) caught on the first cylindrical member (25) or the second cylindrical member (26). As a result, the current-carrying member (12) can be prevented from moving forward or being extended at the time of cutting, which allows the current-carrying member (12) to be cut smoothly.

According to the fifteenth aspect of the present invention, the current-carrying member (12) includes the thick portion (12e). Thus, movement of the current-carrying member (12) is prevented due to the thick portion (12e) caught on the first cylindrical member (25) or the second cylindrical member (26). As a result, the current-carrying member (12) can be prevented from moving forward or being extended at the time of cutting, which allows the current-carrying member (12) to be cut smoothly.

### BRIEF DESCRIPTION OF THE DRAWINGS

FIG. 1 is a cross-sectional plan view of a cutter of the first embodiment.
FIG. 2 is a cross-section taken along the line II-II of FIG. 1.
FIG. 3 is a cross-section taken along the line III-III of FIG. 2 without part of harness.
FIG. 4 is an oblique view of an external structure of the cutter of the first embodiment.
FIG. 5 is an oblique view of an internal structure of the cutter of the first embodiment.
FIG. 6 is an oblique view of a first cylindrical member of the first embodiment.
FIG. 7 is an oblique view of a cutting portion of a blade of the first embodiment.
FIG. 8 is a cross-section showing configurations of and a relationship between the first cylindrical member and a pusher of the first embodiment. FIG. 8(A) shows a state at a point when a high-pressure gas is generated. FIG. 8(B) shows a state in which the pusher moves further from the state shown in FIG. 8(A).
FIG. 9 schematically shows the movement of the blade of the first embodiment. FIG. 9(A) shows a state before the blade cuts the harness. FIG. 9(B) shows a state right immediately after the blade cuts the harness. FIG. 9(C) shows a state at a point when the blade is stopped.
FIG. 10 is a cross-section showing configurations of and a relationship between a first cylindrical member and a pusher of the first variation of the first embodiment. FIG. 10(A) shows a state at a point when a high-pressure gas is generated. FIG. 10(B) shows a state in which the pusher moves further from the state shown in FIG. 10(A).
FIG. 11 schematically shows a relationship between an insertion groove and a harness of the second variation of the first embodiment.
FIG. 12 schematically shows a relationship between the insertion groove and the harness of the second variation of the first embodiment.
Each of FIGS. 13(A) to 13(C) schematically shows the shape of the bottom of an insertion groove and a back side end of a second cylindrical member of the third variation of the first embodiment.
Each of FIGS. 14(A) to 14(C) schematically shows the shape of a harness of the fourth variation of the first embodiment.

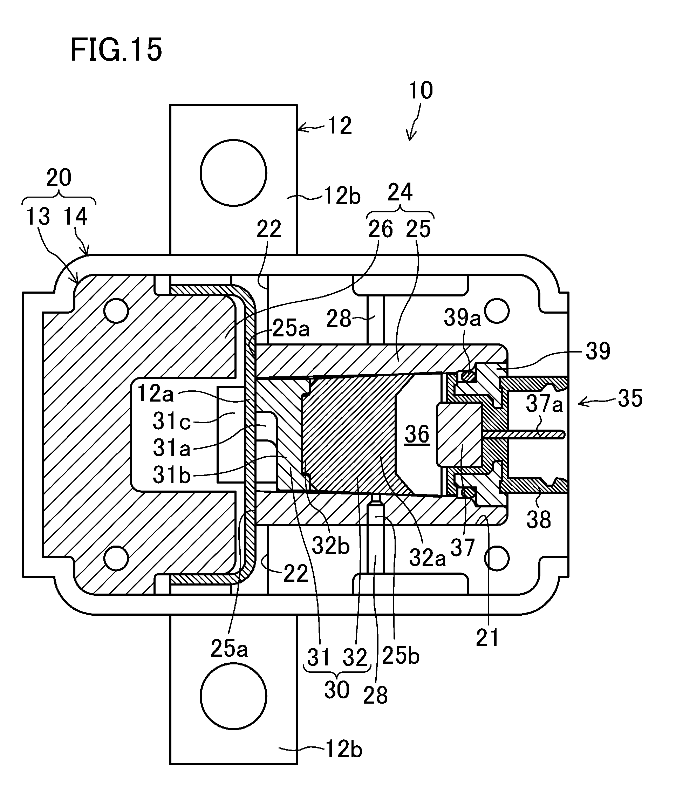

FIG. 15 is a cross-sectional plan view of a cutter of the fifth variation of the first embodiment.

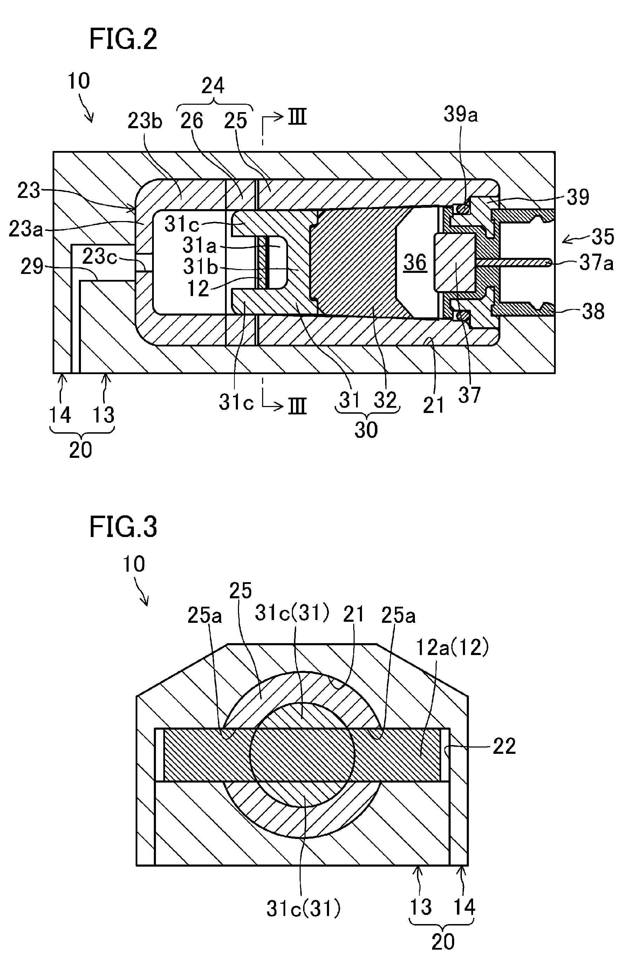

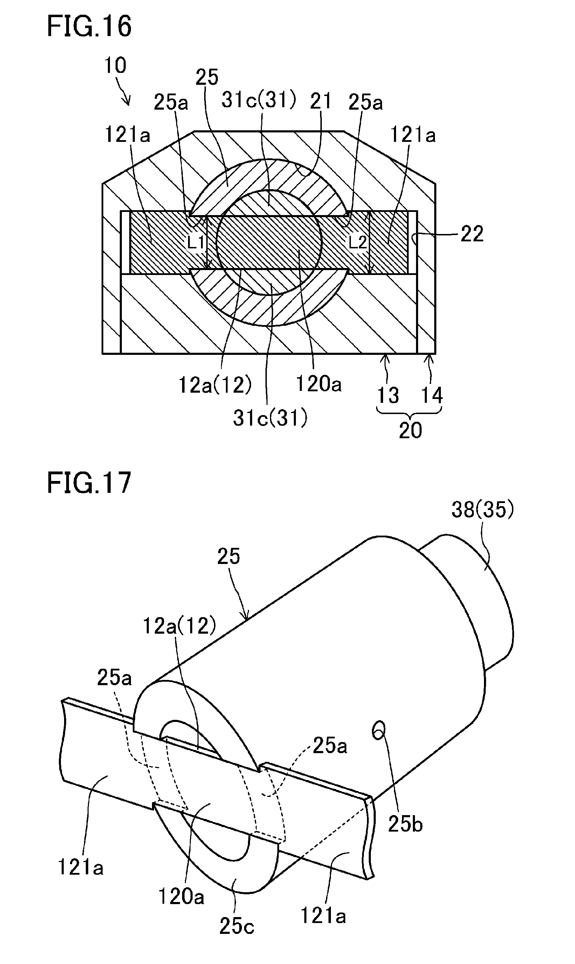

FIG. 16 shows a cutter of the second embodiment corresponding to FIG. 3.
FIG. 17 is an oblique view showing a relationship between a first cylindrical member and a harness of the second embodiment.

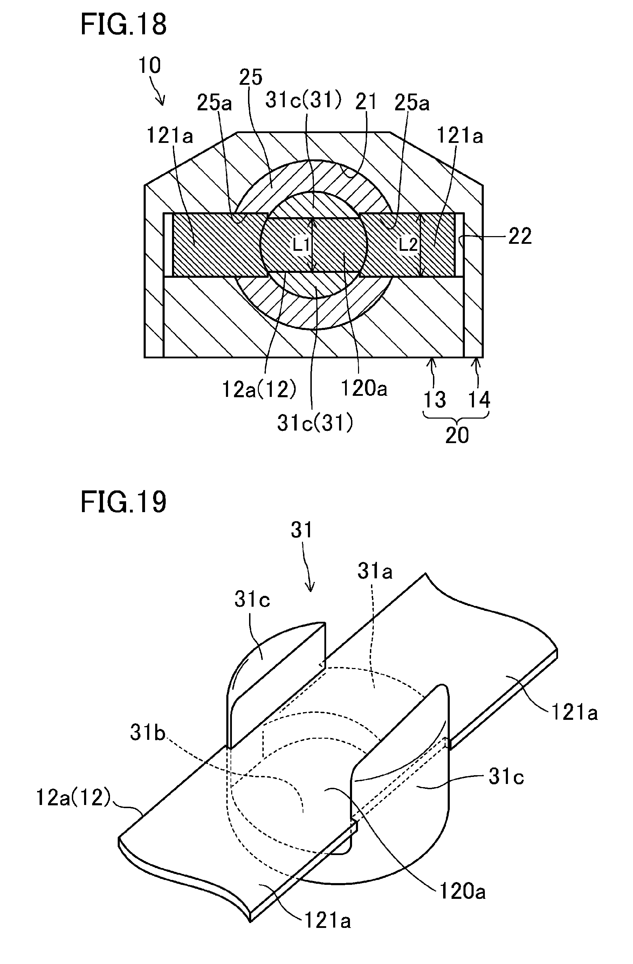

FIG. 18 shows a cutter of the first variation of the second embodiment corresponding to FIG. 3.
FIG. 19 is an oblique view showing a relationship between a cutting portion of a blade and a harness of the first variation of the second embodiment.

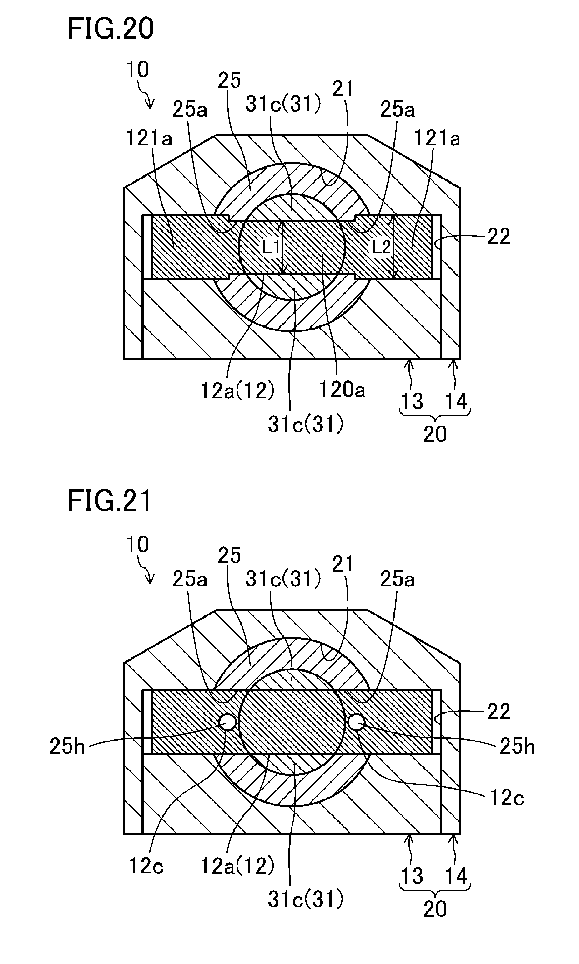

FIG. 20 shows a cutter of the second variation of the second embodiment corresponding to FIG. 3.
FIG. 21 shows a cutter of the third variation of the second embodiment corresponding to FIG. 3.

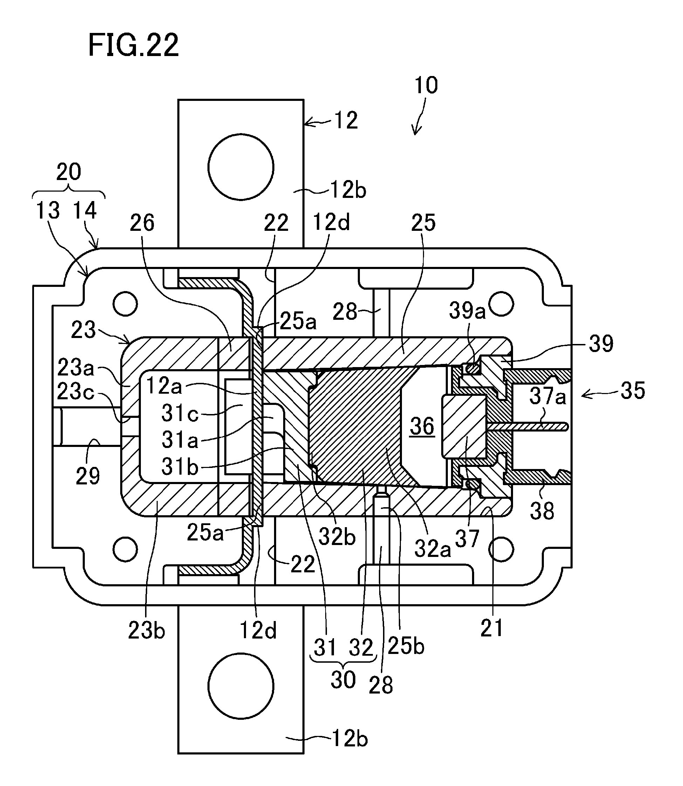

FIG. 22 is a cross-sectional plan view of a cutter of the fourth variation of the second embodiment.

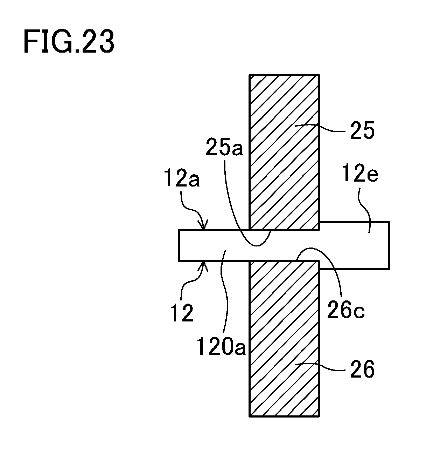

FIG. 23 is a cross-section showing a relationship between a first cylindrical member and a second cylindrical member and a harness of the fifth variation of the second embodiment.

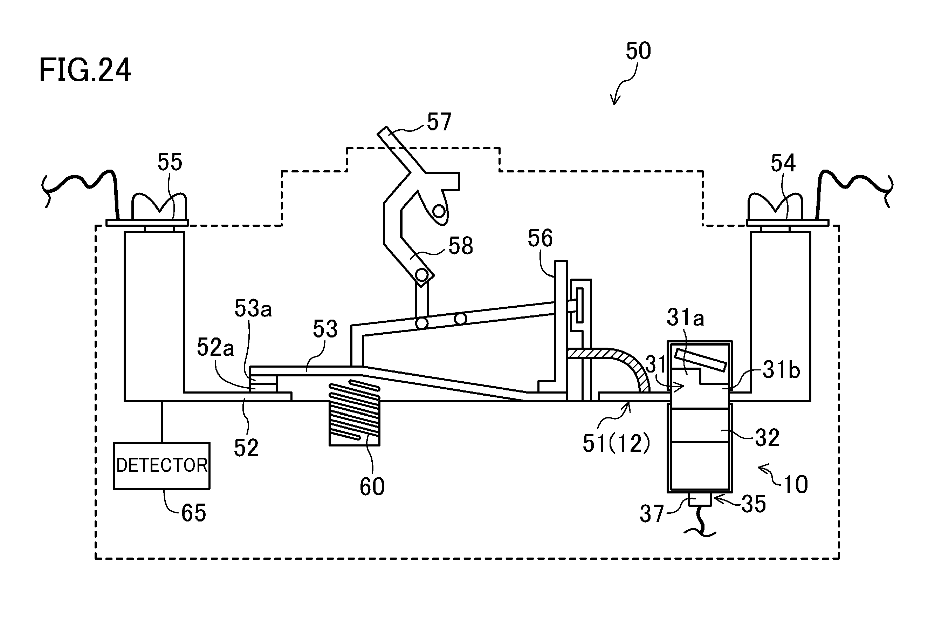

FIG. 24 shows a schematic configuration of a breaker of the third embodiment.

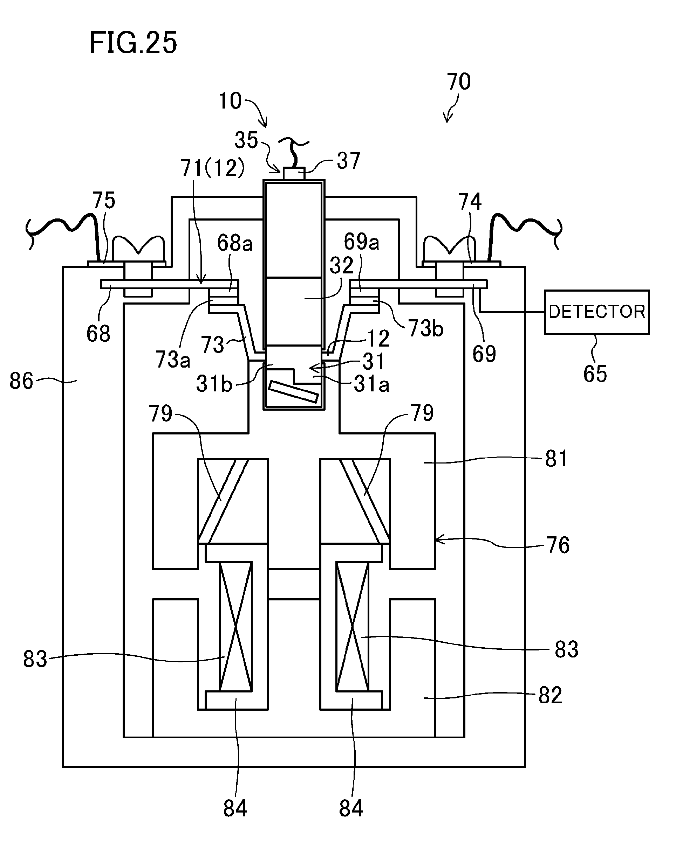

FIG. 25 shows a schematic configuration of a contactor of the fourth embodiment.

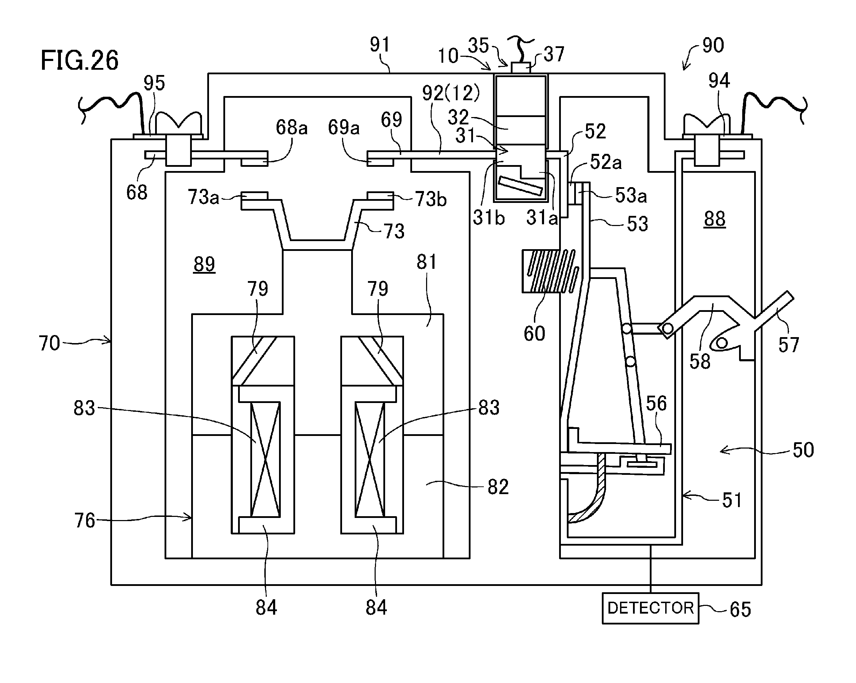

FIG. 26 shows a schematic configuration of an electric circuit breaker of the fifth embodiment.

### DESCRIPTION OF EMBODIMENTS

Embodiments of the present invention will be described in detail below based on the drawings. The following embodiments are merely preferred examples in nature, and are not intended to limit the scope, applications, and use of the invention.

### <First Embodiment of the Invention>

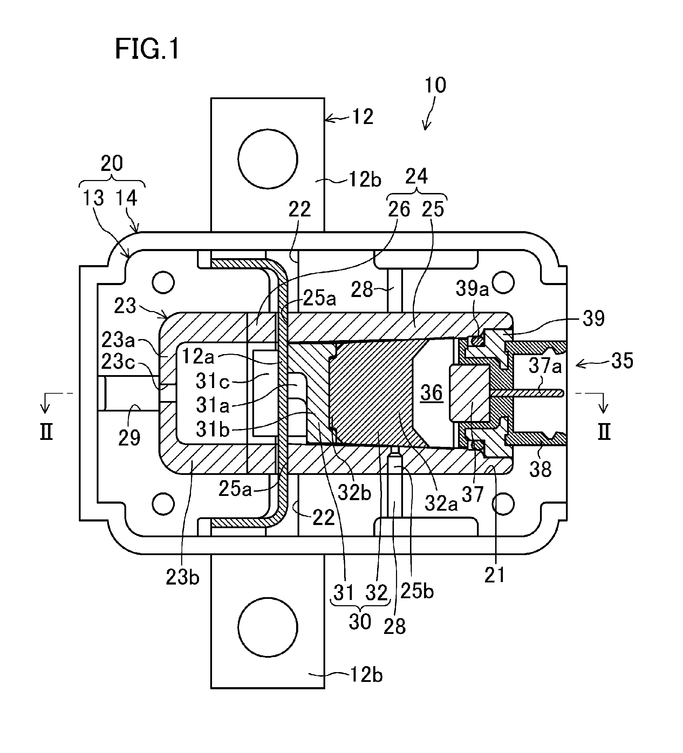

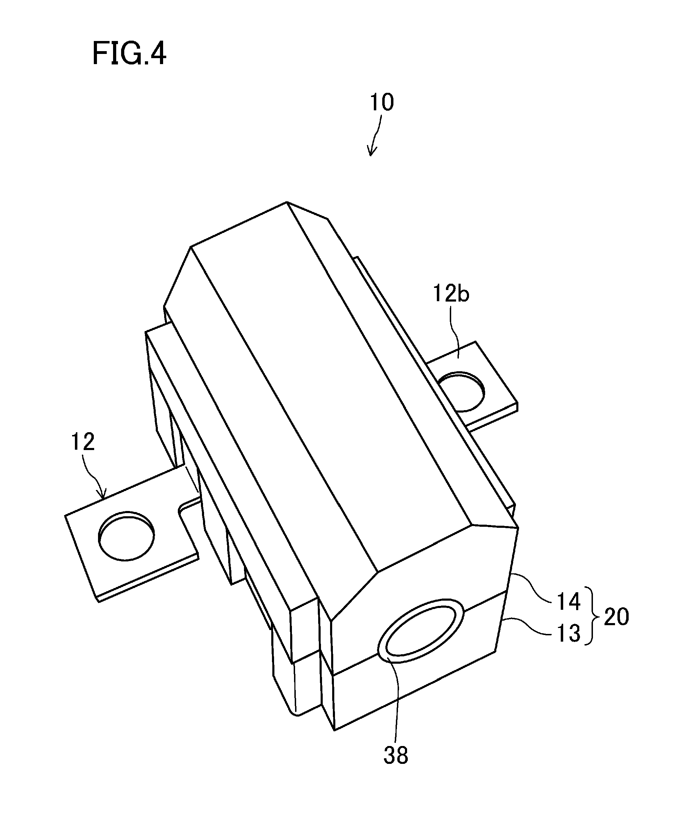

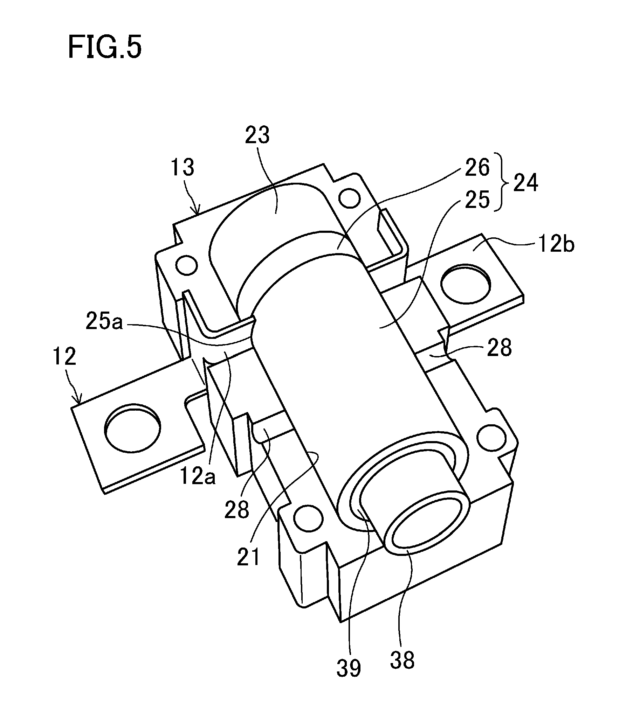

As shown in FIG. 1 to FIG. 8, a cutter (10) of the first embodiment is configured to cut a harness (12), which is a current-carrying member, with a blade (30) moved forward by a high-pressure gas generated by a reaction of a gas-generating agent. The cutter (10) uses an explosive as the gas-generating agent for generating high-pressure gas.

The cutter (10) includes a resin case (20) as shown in FIG. 1 to FIG. 5. A stopper (23), an inner cylinder (24), a blade (30), and a gas generator (35) are accommodated in the resin case (20).

Hereinafter, for convenience of explanation, the left-hand side of FIG. 2 is referred to as the "front side" and the right-hand side of FIG. 2 is referred to as the "back side." The upper side of FIG. 2 is referred to as the "upper side" and the lower side of FIG. 2 is referred to as the "lower side." The front side of the drawing sheet of FIG. 2 in the direction orthogonal to the drawing sheet is hereinafter referred to as the "left side," and the back side thereof is hereinafter referred to as the "right side."

The resin case (20) is made of resin such as polycarbonate (PC). The resin material comprising the resin case (20) is not limited to PC, but may be a resin material, such as plastic. Further, the resin case (20) includes an approximately rectangular parallelepiped base (13) which forms an approximately lower half of the resin case (20), and a cover (14) which integrally covers surfaces of the base (13) except a lower surface and a back surface of the base (13) and which forms an approximately upper half of the resin case (20). That is, the cover (14) is configured to cover an upper surface, a front surface, a left surface, and a right surface of the base (13).

The resin case (20) has an approximately columnar accommodation hole (21) in the base (13) and the cover (14). The stopper (23), the inner cylinder (24) and the gas generator (35) are sequentially accommodated in the accommodation hole (21) from the front side to the back side.

The resin case (20) also has a placement hole (22) for placing the harness (12), in the base (13) and the cover (14). The placement hole (22) is symmetric with respect to a vertical plane including the axis of the accommodation hole (21). Specifically, the placement hole (22) extends laterally outward from a longitudinally central portion of the accommodation hole (21), is bent to the front side, and is then bent downward, and extends to the lower surface of the base (13).

The harness (12) to be placed in the placement hole (22) is in a long plate shape, and has a U-shaped portion (12a) at a middle portion thereof, and two L-shaped portions (12b) continuous with both ends of the U-shaped portion (12a).

As shown in FIG. 1, the resin case (20) also has an exhaust gas passage (28) extending from the accommodation hole (21) to the outside, in the base (13) and the cover (14). A high-pressure gas generated by the gas generator (35) to move the blade (30) forward is exhausted through the exhaust gas passage (28).

The resin case (20) further has an exhaust hole (29) configured to exhaust air from the front side of the accommodation hole (21). The exhaust hole (29) extends forward from a central portion of the front end of the accommodation hole (21), and is then bent downward to the lower surface of the base (13).

The stopper (23) is configured to receive and stop the blade (30) moving forward. The stopper (23) is made of a resin material formed in the shape of a bottomed cylinder. Specifically, the stopper (23) has a disk-like bottom (23a) and a cylindrical cylinder portion (23b), and is disposed such that the bottom (23a) is located forward of the cylinder portion (23b). A hole (23c) is formed in a central portion of the bottom (23a) to communicate with the exhaust hole (29) of the resin case (20).

The inner cylinder (24) is disposed behind the stopper (23) in the accommodation hole (21) to support the harness (12). The inner cylinder (24) includes a first cylindrical member (25) and a second cylindrical member (26), and the harness (12) is sandwiched between these members (25, 26). The blade (30) is slidably accommodated in the inner cylinder (24).

The second cylindrical member (26) is made of a resin material formed in an approximately cylindrical shape, and is located on the back side of the stopper (23) so as to be coaxial with the stopper (23). The second cylindrical member (26) is configured to have an inner diameter through which the blade (30) can be inserted. The second cylindrical member (26) may be made of ceramics.

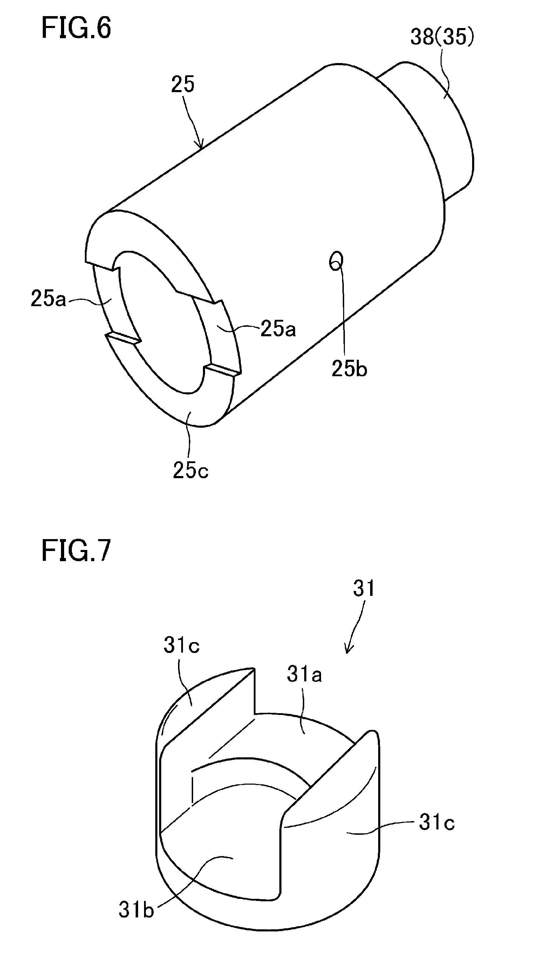

The first cylindrical member (25) is made of a resin material formed in an approximately cylindrical shape, and is located on the back side of the second cylindrical member (26) so as to be coaxial with the second cylindrical member (26). The first cylindrical member (25) is configured to have an inner diameter that is approximately equal to the inner diameter of the second cylindrical member (26). As shown in FIG. 6, a front side end (25c) of the first cylindrical member (25) is provided with two insertion grooves (25a) through which the U-shaped portion (12a) of the harness (12) is inserted. The two insertion grooves (25a) extend in a radial direction of the front side end (25c), and is formed at a location corresponding to the placement hole (22) of the resin case (20). Further, a through hole (25b) which communicates with the exhaust gas passage (28) of the resin case (20) is formed in a side portion of the first cylindrical member (25). That is, the high-pressure gas generated by the gas generator (35) is exhausted through the through hole (25b) and then the exhaust gas passage (28).

As described above, the inner cylinder (24) supports the harness (12) by sandwiching the U-shaped portion (12a) of the harness (12) between the first cylindrical member (25) and the second cylindrical member (26) which are insulating members.

The gas generator (35) generates a high-pressure gas for having the blade (30) in the inner cylinder (24) move forward and cut the harness (12). The gas generator (35) includes an explosive, an igniter (37) configured to ignite the explosive, a holder (38) which holds the igniter (37), and a lid member (39) which blocks the back end of the first cylindrical member (25).

The lid member (39) has an approximately cylindrical shape, and is fitted into the back end of the first cylindrical member (25). A gas generation chamber (36), which is a closed space formed by the fitting of the lid member (39), is formed on the back side of the blade (30). A gap between the lid member (39) and the first cylindrical member (25) is sealed with an O ring (39a). The holder (38) is inserted in the lid member (39).

The igniter (37) is a detonator, and is held by the holder (38) such that a front end portion of the igniter (37) at which a primary explosive is contained is exposed in the gas generation chamber (36). The igniter (37) is provided with a connection pin (37a) connected to a connector (not shown). The igniter (37) allows an explosion of the explosive to generate a high-pressure gas in the gas generation chamber (36) and increase pressure in the gas generation chamber (36), thereby moving (sliding) the blade (30) forward.

The blade (30) is configured to move forward in the inner cylinder (24) due to the high-pressure gas, and cut the harness (12). The blade (30) includes a cutting portion (31) made of a resin material, and a pusher (32) to which the cutting portion (31) is attached. The pusher (32) forms a pressure receiver of the present invention. The material for the cutting portion (31) is not limited to a resin material, but may be a metal material (e.g., steal).

The cutting portion (31) cuts the harness (12) using two cutting portions, i.e., front- and back-side cutting portions, having different heights. Specifically, the cutting portion (31) has a first edge portion (31a) on the front side, and a second edge portion (31b) on the back side having a different height from the height of the first edge portion (31a). The cutting portion (31) includes a guide portion (31c) which protrudes forward of the first edge portion (31a). The outer diameter of the guide portion (31c) is approximately equal to the inner diameter of the inner cylinder (24). Specifically, the outer circumferential surface of the guide portion (31c) slides on an inner surface of the inner cylinder (24). Each of the first edge portion (31a) and the second edge portion (31b) has a flat front end.

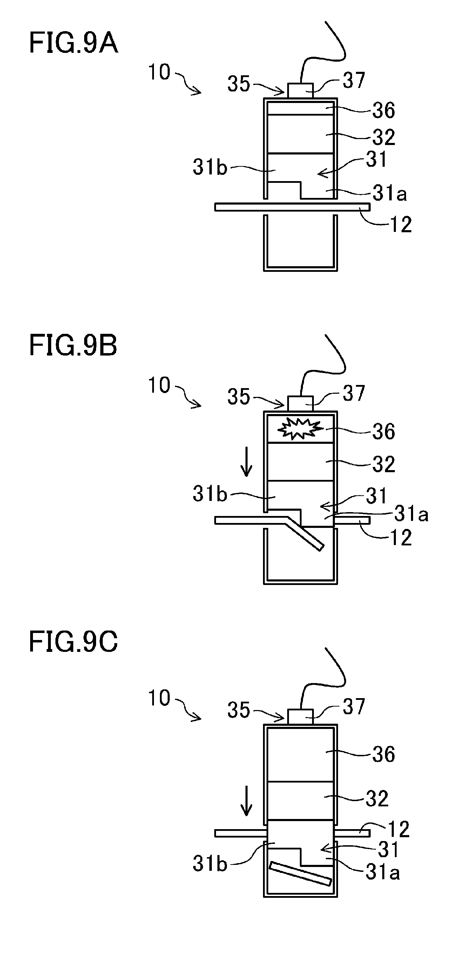

In the cutting portion (31), the difference in height between the first edge portion (31a) and the second edge portion (31b) is larger than the thickness of the U-shaped portion (12a) of the harness (12). Thus, after the first edge portion (31a) has cut the harness (12) at a point, the second edge portion (31b) can cut the harness (12) at another point, as shown in FIG. 9. In other words, the blade (30) is configured to cut the harness (12) sequentially with the first edge portion (31a) and the second edge portion (31b) as the blade (30) moves forward due to the high-pressure gas.

The pusher (32) is located on the back side of the cutting portion (31), and receives pressure of the high-pressure gas and moves (slides) the cutting portion (31) forward. The pusher (32) includes a resin body (32a) having an approximately columnar outer shape. The body (32a) is disposed to be coaxial with the first cylindrical member (25). The diameter of the pusher (32) is slightly larger than the diameter of the cutting portion (31), and forms an insulating portion. Further, a protrusion (32b) which protrudes forward is provided at a front end of the body (32a). The protrusion (32b) is fitted into the back end of the cutting portion (31), and thus the cutting portion (31) is held on the pusher (32).

### -Relationship Between First Cylindrical Member and Pusher-

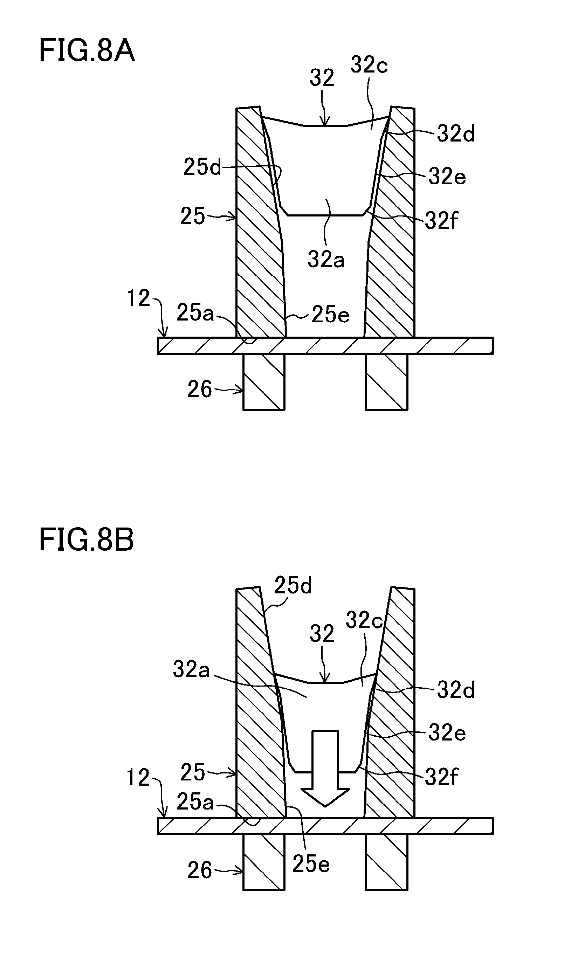

A relationship between the first cylindrical member (25) and the pusher (32) will be described with reference to FIG. 8. In FIG. 8, the protrusion (32b) of the pusher (32) is omitted, and the cutting portion (31) is omitted.

The first cylindrical member (25) has a tapered portion (25d, 25e) from the back end to the front end. The tapered portion (25d, 25e) is a portion where the inner diameter is reduced from the back side to the front side. The tapered portion (25d, 25e) includes a back side tapered portion (25d) on the back side, and a front side tapered portion (25e) continuous to and located forward of the back side tapered portion (25d). A tilt angle of the front side tapered portion (25e) is smaller than a tilt angle of the back side tapered portion (25d).

The tilt angle of the front side tapered portion (25e) is determined based on a draft angle necessary in resin molding. Further, the tilt angle of the front side tapered portion (25e) is determined such that the inner diameter of the front end of the first cylindrical member (25) (i.e., the inner diameter of the lower end in FIG. 8) is approximately equal to the outer diameter of the cutting portion (31). It is thus possible to cut the harness (12) at a point close to the point where the harness (12) is sandwiched by the first cylindrical member (25).

In the present embodiment, the back side tapered portion (25d) and the front side tapered portion (25e) serve as a movement preventing portion which prevents movement of the harness (12) and as a strong pressure portion. The movement preventing portion prevents the harness (12) from being pulled and moved or extended by the cutting portion (31) of the blade (30) at the time of cutting of the harness (12) by the cutting portion (31). Further, the strong pressure portion is configured to increase the force of sandwiching the harness (12) between the first cylindrical member (25) and the second cylindrical member (26).

The body (32a) of the pusher (32) includes a projection (32c), which is a back end periphery projecting backward. Further, the body (32a) of the pusher (32) includes three types of tapered portions (32d, 32e, 32f) whose diameters are reduced from the back side to the front side. Specifically, the tapered portions (32d, 32e, 32f) are a back side tapered portion (32d), a middle tapered portion (32e), and a front side tapered portion (32f) formed sequentially from the back side. A tilt angle of the middle tapered portion (32e) is the same as the tilt angle of the back side tapered portion (25d) of the first cylindrical member (25). Tilt angles of the back side tapered portion (32d) and the front side tapered portion (32f) are larger than the tilt angle of the middle tapered portion (32e). The term "tilt angle" as used herein is an angle tilted with respect to a vertical dimension in FIG. 8.

### -Operation-

The cutter (10) of the first embodiment is provided, for example, such that a harness (12) of an electrical device in a factory is inserted in the placement hole (22) and passes between the first cylindrical member (25) and the second cylindrical member (26). The harness (12) is sandwiched between and supported by the first cylindrical member (25) and the second cylindrical member (26).

The cutter (10) is provided, with the igniter (37) being connected to a fire alarm or an earthquake alarm, etc. When the fire alarm detects fire, or the earthquake alarm detects an earthquake, an alarm signal is fed to the igniter (37). When the alarm signal is fed to the igniter (37), the igniter (37) explodes an explosive.

As shown in FIGS. 9(A) to 9(C), when the explosive goes off, high-pressure gas is generated by the explosion, which increases the pressure in the gas generation chamber (36), provides a forward thrust to the pusher (32). As a result, the blade (30) (the pusher (32) and the cutting portion (31)) moves (slides) forward, and the first edge portion (31a) of the cutting portion (31) instantly cuts the harness (12) at a point first (see FIG. 9(A) and FIG. 9(B)), and then, the second edge portion (31b) of the cutting portion (31) instantly cuts the harness (12) at another point (see FIG. 9(C)). After the blade (30) cuts the harness (12), the blade (30) moves further forward, and comes in contact with the bottom (23a) of the stopper (23) and stops (see FIG. 9(C)). As described above, the cutter (10) operates when necessary and operates only once.

When the blade (30) moves forward, the air in the inner cylinder (24) and the stopper (23) on the front side of the blade (30) is exhausted to the outside of the cutter (10) through an exhaust path formed by the hole (23c) in the bottom (23a) of the stopper (23) and the exhaust hole (29) in the resin case (20). Therefore, the forward movement of the blade (30) is not blocked by the air on the front side of the blade (30) compressed by the forward movement of the blade (30), and the blade (30) can smoothly move forward.

Further, when the pusher (32) moves forward, a space on the back side of the pusher (32) in the first cylindrical member (25) communicates with the through hole (25b) and the exhaust gas passage (28). Thus, the high-pressure gas in the first cylindrical member (25) is exhausted through the through hole (25b) and the exhaust gas passage (28).

As shown in FIG. 8(A), the projection (32c) of the pusher (32) is brought into contact with the back side tapered portion (25d) of the first cylindrical member (25) at the time of generation of the high-pressure gas, thereby providing sealing. When the pressure in the gas generation chamber (36) is further increased, the projection (32c) is deformed and the middle tapered portion (32e) of the pusher (32) and the back side tapered portion (25d) of the first cylindrical member (25) come in contact with each other, thereby providing sealing. Since the middle tapered portion (32e) and the back side tapered portion (25d) have the same tilt angle, sealing is achieved by the surface of the middle tapered portion (32e). Therefore, sealing properties are improved compared to the case in which sealing is achieved by linear contact. Moreover, since the sealing is achieved by a surface contact, contact stress is lower than in the case where sealing is achieved by a liner contact. As a result, the first cylindrical member (25) and the pusher (32) are not readily damaged.

Further, the inner diameter at the back side tapered portion (25d) of the first cylindrical member (25) is reduced in the direction along which the pusher (32) moves forward, which means that a sliding resistance (or friction) with the pusher (32) is increased. In this structure, the first cylindrical member (25) is caused to move forward (i.e., toward the second cylindrical member (26)) as the pusher (32) moves forward. This increases the force of sandwiching the harness (12) between the first cylindrical member (25) and the second cylindrical member (26), and the harness (12) is more firmly fixed (held).

When the pusher (32) further moves forward in the first cylindrical member (25) and reaches the front side tapered portion (25e) as shown in FIG. 8(B), contact force between the middle tapered portion (32e) of the pusher (32) and the front side tapered portion (25e) of the first cylindrical member (25) is increased because the inner diameter of the first cylindrical member (25) is reduced. Sealing properties are thus increased. Moreover, when the contact force between the middle tapered portion (32e) and the front side tapered portion (25e) is increased, the sliding resistance (or friction) of the pusher (32) is also increased. Thus, the forward movement of the pusher (32) is restricted. As a result, it is possible to ease the impact of collision of the cutting portion (31) with the stopper (23) after the harness (12) is cut.

Since the inner diameter of the first cylindrical member (25) is reduced, it is highly likely that the inner surface of the first cylindrical member (25) is rubbed away by the front end of the pusher (32). However, it is possible to prevent the inner surface of the first cylindrical member (25) from being rubbed away because the pusher (32) has the front side tapered portion (32f).

### -Advantages of First Embodiment-

According to the first embodiment, the first cylindrical member (25) includes the tapered portion (25d, 25e) at which the inner diameter of the first cylindrical member (25) is reduced from the back side to the front side, and the tapered portion (25d, 25e) serves as a movement preventing portion and as a strong pressure portion. It is therefore possible to increase the sliding resistance (or friction) between the pusher (32) and the first cylindrical member (25). In this structure, the first cylindrical member (25) is caused to move forward (i.e., toward the second cylindrical member (26)). As a result, it is possible to increase the force of sandwiching the harness (12) between the first cylindrical member (25) and the second cylindrical member (26), and therefore possible to fix (hold) the harness (12) more firmly. Moreover, the harness (12) can be prevented from moving forward or being extended at the time of cutting, which allows the harness (12) to be cut smoothly. In other words, cutting ability increases. As described above, in the above embodiment, the first cylindrical member (25) includes the tapered portion (25d, 25e) at which the inner diameter of the first cylindrical member (25) is reduced from the back side to the front side, thereby increasing the sliding resistance of the pusher (32) and causing the first cylindrical member (25) to move forward.

Further, as described above, when the sliding resistance (or friction) is increased, the sealing properties between the pusher (32) and the first cylindrical member (25) are increased. It is therefore possible to ensure sufficient forward thrust (i.e., thrust power) of the pusher (32), which also increases the cutting ability.

The inner diameter of the front end of the first cylindrical member (25) (i.e., the inner diameter of the lower end in FIG. 8) is approximately equal to the outer diameter of the cutting portion (31). It is thus possible to cut the harness (12) at a point close to the point where the harness (12) is sandwiched by the first cylindrical member (25). As a result, it is possible to further prevent the harness (12) from extending forward at the time of cutting, and therefore, the cutting ability can be further increased.

The first cylindrical member (25) includes the back side tapered portion (25d), and the front side tapered portion (25e) of which the tilt angle and the inner diameter are smaller than those of the back side tapered portion (25d). The pusher (32) includes the middle tapered portion (32e). These structures allow the pusher (32) to be easily press-fitted into the first cylindrical member (25) with the pressure of the high-pressure gas, and reliably increase the sliding resistance (or friction) between the pusher (32) and the first cylindrical member (25). It is therefore possible to increase the force of sandwiching the harness (12) between the first cylindrical member (25) and the second cylindrical member (26), and increase the sealing properties between the pusher (32) and the first cylindrical member (25).

### <Variations of First Embodiment>

Now, variations of the first embodiment will be described with reference to the drawings.

### -First Variation-

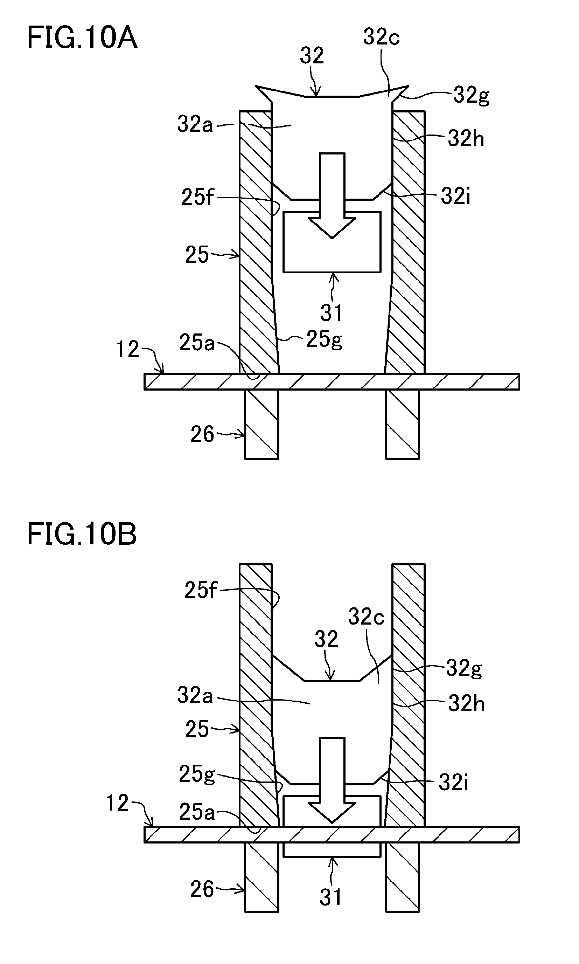

In the present variation, configurations of the first cylindrical member (25) and the pusher (32) are changed from those of the first embodiment, as shown in FIG. 10.

Specifically, the first cylindrical member (25) of the present variation includes a straight portion (25f) having a constant inner diameter on the back side, and a tapered portion (25g) continuous to and located forward of the straight portion (25f). At the tapered portion (25g), the inner diameter is reduced from the back side to the front side. The straight portion (25f) extends from the back end to an approximately middle portion. The tapered portion (25g) is continuous to the straight portion (25f) and extends to the front end. In other words, the inner diameter of the first cylindrical member (25) is reduced from a middle portion in the axial direction. In the present variation, the tapered portion (25g) serves as a movement preventing portion which prevents movement of the harness (12).

The body (32a) of the pusher (32) of the present variation includes a projection (32c), which is a back end periphery projecting backward, as in the first embodiment. Further, the body (32a) includes two types of tapered portions (32g, 32i) whose outer diameters are reduced from the back side to the front side, and a straight portion (32h) having a constant outer diameter. Specifically, the two tapered portions (32g, 32i) are a back side tapered portion (32g) formed on the back side, and a front side tapered portion (32i) formed on the front side. The straight portion (32h) is located between and continuous to the two tapered portions (32g, 32i). The straight portion (32h) slides with the straight portion (25f) of the first cylindrical member (25).

In the present variation, as shown in FIG. 10(A), the projection (32c) and the straight portion (32h) of the pusher (32) are brought into contact with the straight portion (25f) of the first cylindrical member (25) at the time of generation of the high-pressure gas, thereby providing sealing. When the pusher (32) further moves forward in the first cylindrical member (25) and reaches the tapered portion (25g) as shown in FIG. 10(B), the sliding resistance (or friction) of the pusher (32) is increased because the inner diameter of the first cylindrical member (25) is reduced. The first cylindrical member (25) is caused to move forward (i.e., toward the second cylindrical member (26)) as the pusher (32) moves forward. This increases the force of sandwiching the harness (12) between the first cylindrical member (25) and the second cylindrical member (26), and the harness (12) is more firmly fixed (held). Further, the contact force between the pusher (32) and the first cylindrical member (25) is increased as the inner diameter of the first cylindrical member (25) is reduced. Sealing properties are thus increased.

Since the pusher (32) includes the back side tapered portion (32g), it is possible to reliably increase the sliding resistance (or friction) between the pusher (32) and the first cylindrical member (25). This can increase the force of sandwiching the harness (12) between the first cylindrical member (25) and the second cylindrical member (26), and increase the sealing properties between the pusher (32) and the first cylindrical member (25).

Since the first cylindrical member (25) includes the tapered portion (25g), the forward movement of the pusher (32) is restricted after the harness (12) is cut. As a result, it is possible to prevent the cutting portion (31) from colliding with the stopper (23).

In the present variation, too, it is possible to prevent the inner surface of the first cylindrical member (25) from being rubbed away by the front end of the pusher (32) because the pusher (32) has the front side tapered portion (32i). The other configurations, effects and advantages are the same as those in the first embodiment.

### -Second Variation-

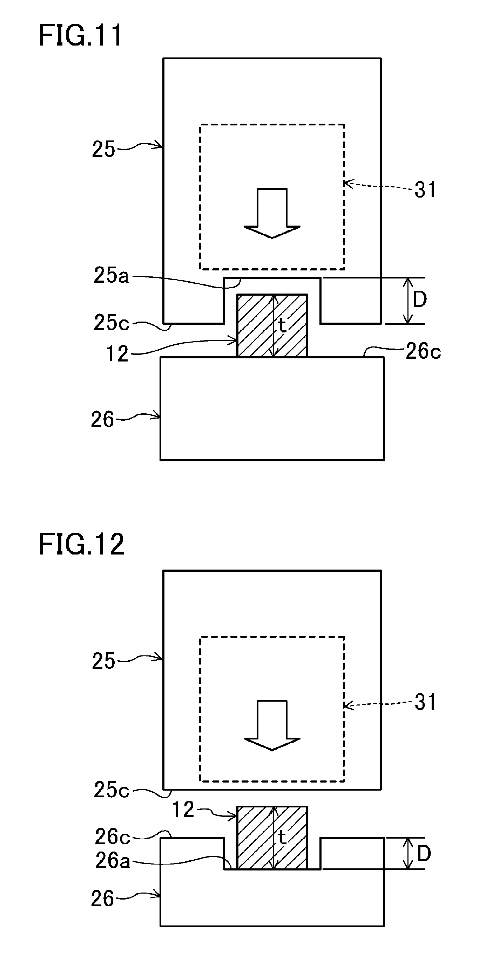

In the present variation, the depth of the insertion groove (25a) in the first cylindrical member (25) of the first embodiment is specified as shown in FIG. 11. Specifically, a depth D of the insertion groove (25a) is set to be smaller than a thickness t of the harness (12). In this structure, the harness (12) can be reliably pushed toward the second cylindrical member (26) by the first cylindrical member (25) when the first cylindrical member (25) is caused to move forward (i.e., toward the second cylindrical member (26)) by the sliding resistance (or friction) of the pusher (32), compared to the case, for example, where the depth D and the thickness t are equal to each other. It is therefore possible to reliably increase the force of sandwiching the harness (12) between the first cylindrical member (25) and the second cylindrical member (26), and the harness (12) can be firmly held.

Also in the case shown in FIG. 12 where an insertion groove (26a) for the harness (12) is formed not in the first cylindrical member (25), but in a back side end (26c) of the second cylindrical member (26), the depth D of the insertion groove (26a) is set to be smaller than the thickness t of the harness (12).

Although not shown, in the case where insertion grooves are formed in both of the front side end (25c) of the first cylindrical member (25) and the back side end (26c) of the second cylindrical member (26), that is, in the case where the insertion grooves are formed in both of ends of the first cylindrical member (25) and the second cylindrical member (26) which face each other in the axial direction of the cylindrical members (25, 26), the total depth of the two insertion grooves is set to be smaller than the thickness of the harness (12).

As described above, in the present variation, the depth D of the insertion groove (25a, 26a) (a total depth D of the insertion grooves (25a, 26a)) is set to smaller than the thickness t of the harness (12), thereby making it possible to hold the harness (12) more firmly. Therefore, the harness (12) can be prevented from moving forward or being extended at the time of cutting. In other words, in the present variation, the insertion groove (25a, 26a) having the depth D as specified above serves as a movement preventing portion which prevents movement of the harness (12). The other configurations, effects and advantages are the same as those in the first embodiment.

### -Third Variation-

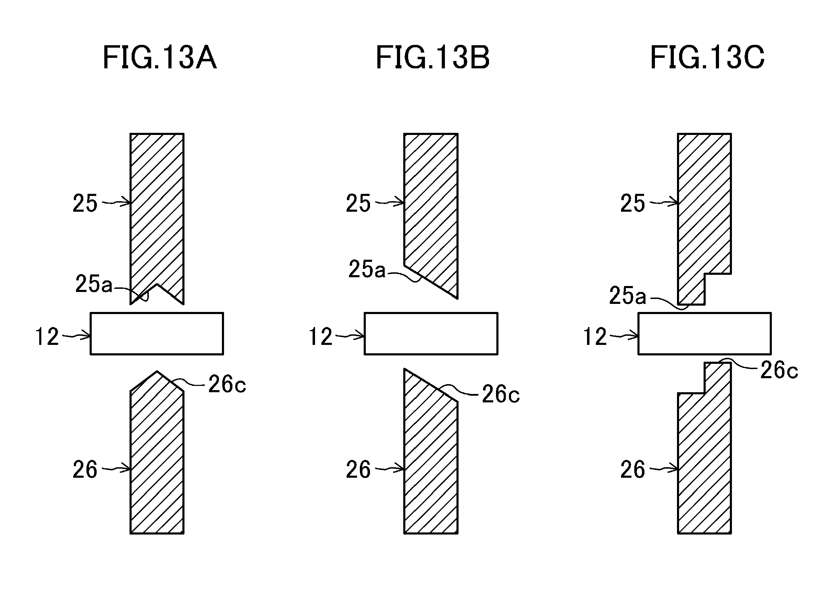

In the present variation, the shape of the insertion groove (25a) of the first cylindrical member (25) and the shape of the back side end (26c) of the second cylindrical member (26) are changed as shown in FIG. 13. That is, the bottom of the insertion groove (25a) and the back side end (26c) are not simple plane surfaces, but have uneven surfaces.

For example, the bottom of the insertion groove (25a) has an approximately V-shaped groove, and the back side end (26c) of the second cylindrical member (26) has an inverted V shape (see FIG. 13(A)). With this structure, the harness (12) is not readily slip at the time of cutting, compared to the case where the harness (12) is sandwiched between plane surfaces. It is therefore possible to further prevent the harness (12) from moving forward or being extended at the time of cutting, and the cutting ability is further increased.

As another example, the bottom of the insertion groove (25a) and the back side end (26c) may form a single inclined surface (see FIG. 13(B)), or may form a stepped portion (see FIG. 13(C)). In these cases, as well, it is possible to further prevent the harness (12) from moving forward or being extended at the time of cutting.

In the present variation, the insertion grooves (25a, 26a) and the back side end (26c) having the above-described structures serve as a movement preventing portion which prevents movement of the harness (12). The other configurations, effects and advantages are the same as those in the first embodiment.

In the present variation, the first cylindrical member (25) is provided with the insertion groove (25a), but the insertion groove (25a) is not necessarily formed. That is, in the present variation, the front side end (25c) of the first cylindrical member (25) and the back side end (26c) of the second cylindrical member (26) may be in an approximately V-shape.

### -Fourth Variation-

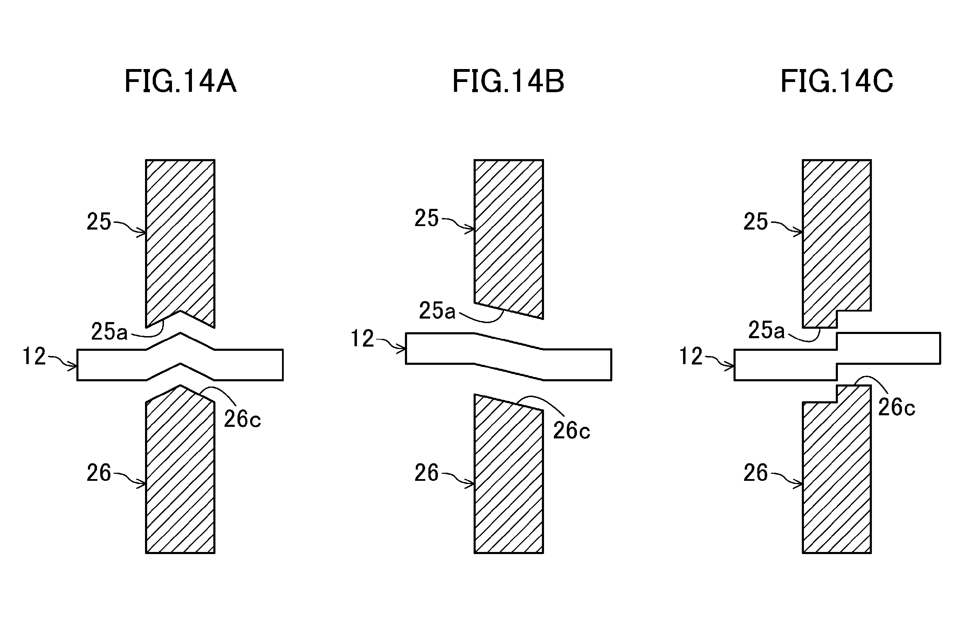

In the present variation, the shape of the harness (12) is changed as shown in FIG. 14. That is, the harness (12) has an uneven surface to correspond to the shapes of the bottom of the insertion groove (25a) and the back side end (26c) in the third variation.

For example, the harness (12) includes an approximately V-shaped portion which corresponds to the bottom of the insertion groove (25a) and the back side end (26c) (see FIG. 14(A)). With this structure, the harness (12) is not readily slip at the time of cutting compared to the case of sandwiching a flat harness (12). It is therefore possible to further prevent the harness (12) from moving forward or being extended at the time of cutting, and the cutting ability is further increased.

As another example, the harness (12) may include one inclined surface (see FIG. 14(B)), or may include a stepped portion (see FIG. 14(C)). In these cases, as well, it is possible to further prevent the harness (12) from moving forward or being extended at the time of cutting.

In the present variation, the harness (12), as well as the insertion grooves (25a, 26a) and the back side end (26c), serve as a movement preventing portion which prevents movement of the harness (12). The other configurations, effects and advantages are the same as those in the first embodiment.

In the present variation, the first cylindrical member (25) is provided with the insertion groove (25a), but the insertion groove (25a) is not necessarily formed. That is, in the present variation, the front side end (25c) of the first cylindrical member (25) and the back side end (26c) of the second cylindrical member (26) may be in an approximately V-shape.

### -Fifth Variation-

In the present variation, the second cylindrical member (26), the stopper (23), and the base (13) are integrally formed, as shown in FIG. 15. That is, the stopper (23) comprised of a different member is not provided in the present variation. The other configurations, effects and advantages are the same as those in the first embodiment.

### <Second Embodiment of the Invention>

Now, the second embodiment will be described. A cutter (10) of the present embodiment has a harness (12) whose configuration is changed from the configuration of the harness (12) of the cutter (10) of the first embodiment, as shown in FIG. 16 and FIG. 17. Specifically, in the second embodiment, the strong pressure portion of the first embodiment has been replaced with an engagement portion.

Specifically, the U-shaped portion (12a) of the harness (12) includes a substrate (120a) which passes through the insertion grooves (25a) of the first cylindrical member (25). The substrate (120a) is a straight plate member extending in the radial direction of the first cylindrical member (25). The substrate (120a) includes wider portions (121a) at locations outside of outward ends of the insertion grooves (25a) in the radial direction of the first cylindrical member (25). The width L2 of each of the wider portions (121a) is larger than the width L1 of each of the insertion grooves (25a). The width of the wider portion (121a) is increased outward from the outward end of the insertion groove (25a). The wider portion (121a) of the harness (12) is a movement preventing portion, and serves as one of engagement portions. That is, the engagement portion is configured such that the harness (12) can be caught on at least one of the first cylindrical member (25), the second cylindrical member (26), and the blade (30).

In the present embodiment, the harness (12) is prevented from moving radially inward in the insertion grooves (25a) (i.e., radially inward of the first cylindrical member (25)) at the time of cutting of the harness (12) with the cutting portion (31), because the wider portions (121a) are caught on the insertion grooves (25a). It is therefore possible to further prevent the harness (12) from moving forward or being extended at the time of cutting.

In the present embodiment, an example in which the insertion grooves (25a) are formed in the front side end (25c) of the first cylindrical member (25) has been described. However, the present invention is not limited to this configuration, and a similar configuration can be adopted to the case in which the insertion grooves are formed in the back side end (26c) of the second cylindrical member (26), or the case in which the insertion grooves are formed in both of the front side end (25c) of the first cylindrical member (25) and the back side end (26c) of the second cylindrical member (26).

In the present embodiment, only the engagement portion is formed, but the strong pressure portion of the first embodiment may also be formed together with the engagement portion. That is, both of the strong pressure portion of the first embodiment and the engagement portion of the second embodiment can be formed.

### <Variation of Second Embodiment>

Now, variations of the second embodiment will be described with reference to the drawings.

### -First Variation-

In the present variation, the locations of the wider portions (121a) in the harness (12) of the second embodiment are changed, as shown in FIG. 18 and FIG. 19.

The wider portions (121a) of the harness (12) of the present variation are located on the outside of the guide portions (31c) of the cutting portion (31) in a direction along which the harness (12) passes in between the guide portions (31c). The width L2 of each of the wider portions (121a) is larger than a distance L1 between the two (a pair of) guide portions (31c). The width of the wider portion (121a) is increased from an outward end of the guide portion (31c) in the direction along which the harness (12) passes in between the guide portions (31c). In the present variation, as well, the wider portion (121a) serves as a movement preventing portion which prevents movement of the harness (12).

In the present variation, the harness (12) is prevented from moving radially inward of the first cylindrical member (25) at the time of cutting of the harness (12) with the cutting portion (31), because the wider portions (121a) are caught on the guide portions (31c) of the cutting portion (31). It is therefore possible to further prevent the harness (12) from moving forward or being extended at the time of cutting of the harness (12). The other configurations, effects and advantages are the same as those in the second embodiment.

### -Second Variation-

In the present variation, the locations of the wider portions (121a) in the harness (12) of the second embodiment are changed, as shown in FIG. 20.

The wider portions (121a) of the harness (12) of the present variation are located in the middle of the insertion grooves (25a) of the first cylindrical member (25). That is, each of the insertion grooves (25a) of the first cylindrical member (25) has an increased width from a middle portion of the insertion groove (25a) toward outside, and the wider portion (121a) of the harness (12) is configured to correspond to the increased width of the insertion groove (25a) of the first cylindrical member (25).

In the present variation, the harness (12) is prevented from moving radially inward from the insertion grooves (25a) (i.e., radially inward of the first cylindrical member (25)) at the time of cutting of the harness (12) with the cutting portion (31), because the wider portions (121a) are caught on the insertion grooves (25a). It is therefore possible to further prevent the harness (12) from moving forward or being extended at the time of cutting of the harness (12).

In the present variation, an example in which the insertion grooves (25a) are formed in the front side end (25c) of the first cylindrical member (25) has been described. However, the present invention is not limited to this configuration, and a similar configuration can be adopted to the case in which the insertion grooves are formed in the back side end (26c) of the second cylindrical member (26), or the case in which the insertion grooves are formed in both of the front side end (25c) of the first cylindrical member (25) and the back side end (26c) of the second cylindrical member (26). The other configurations, effects and advantages are the same as those in the second embodiment.

### -Third Variation-

In the present variation, small holes, which are recesses, are formed in the harness (12) of the second embodiment, and projections (25h) are provided in the insertion grooves (25a) of the first cylindrical member (25), as shown in FIG. 21. The projections (25h) of the first cylindrical member (25) are fitted in the small holes in the harness (12).

In the present variation, the harness (12) is prevented from moving radially inward from the insertion grooves (25a) (i.e., radially inward of the first cylindrical member (25)) at the time of cutting of the harness (12) with the cutting portion (31), because the projections (25h) of the insertion grooves (25a) are caught in the small holes of the harness (12). It is therefore possible to further prevent the harness (12) from moving forward or being extended at the time of cutting of the harness (12).

In the present variation, a case in which the projections (25h) are provided in the insertion grooves (25a), and the small holes (which are recesses) are formed in the harness (12), has been described. However, the present invention is not limited to this configuration, and a recess (12c) may be formed in the insertion groove (25a), and a projection (25h) may be provided on the harness (12). Further, the projection (25h) or the recess (12c) may be provided on or formed in the back side end (26c) of the second cylindrical member (26) in place of the first cylindrical member (25). The other configurations, effects and advantages are the same as those in the second embodiment.

In the present variation, the insertion grooves (25a) of the first cylindrical member (25) may not be necessarily formed.

### -Fourth Variation-

In the present variation, the harness (12) of the second embodiment incudes bent portions (12d) as shown in FIG. 22.

The bent portions (12d) correspond to the outer circumferential surface of the second cylindrical member (26) and are caught on the outer circumferential surface of the second cylindrical member (26).

In the present variation, the harness (12) is prevented from moving radially inward from the insertion grooves (25a) (i.e., radially inward of the first cylindrical member (25)) at the time of cutting of the harness (12) with the cutting portion (31), because the bent portions (12d) of the harness (12) are caught on the outer circumferential surface of the second cylindrical member (26). It is therefore possible to further prevent the harness (12) from moving forward or being extended at the time of cutting of the harness (12).

In the present variation, the bent portions (12d) may correspond to the outer circumferential surface of the first cylindrical member (25), and be caught on the outer circumferential surface of the first cylindrical member (25). The other configurations, effects and advantages are the same as those in the second embodiment.

### -Fifth Variation-

In the present variation, the harness (12) of the second embodiment includes a thick portion (12e) as shown in FIG. 23.

Specifically, the U-shaped portion (12a) of the harness (12) includes a substrate (120a) which passes through the insertion grooves (25a) of the first cylindrical member (25). The substrate (120a) is a straight plate member extending in the radial direction of the first cylindrical member (25) and the second cylindrical member (26). The substrate (120a) includes a thick portion (12e) on a radially outward portion of the first cylindrical member (25) and the second cylindrical member (26). The thickness of the thick portion (12e) is greater than the distance between the first cylindrical member (25) and the second cylindrical member (26). The thick portion (12e) of the harness (12) serves as a movement preventing portion which prevents movement of the harness (12).

In the present variation, the harness (12) is prevented from moving radially inward in the insertion grooves (25a) (i.e., radially inward of the first cylindrical member (25)) at the time of cutting of the harness (12) with the cutting portion (31), because the thick portion (12e) of the harness (12) is caught on the outer circumferential surfaces of the first cylindrical member (25) and the second cylindrical member (26). It is therefore possible to further prevent the harness (12) from moving forward or being extended at the time of cutting of the harness (12). The other configurations, effects and advantages are the same as those in the second embodiment.

In the present variation, the insertion grooves (25a) of the first cylindrical member (25) may not be necessarily formed. That is, it is only necessary that the thick portion (12e) has a thickness greater than the distance between the first cylindrical member (25) and the second cylindrical member (26). In this configuration, the thick portion (12e) only needs to be caught on one or both of the outer circumferential surface of the first cylindrical member (25) and the outer circumferential surface of the second cylindrical member (26).

### <Third Embodiment of the Invention>

Now, the third embodiment will be described. As shown in FIG. 24, the third embodiment is directed to a breaker (50) including a cutter (10) of the present invention.

The breaker (50) includes a load terminal (55) and a supply terminal (54) provided on a resin casing (not shown), and a terminal-to-terminal connection member (51) which is a harness (12) configured to connect the load terminal (55) and the supply terminal (54).

The terminal-to-terminal connection member (51) includes a stationary contact (52) connected to the load terminal (55), and a movable contact (53) connected to the supply terminal (54). The movable contact (53) is movable between the contact location at which the movable contact (53) is in contact with the stationary contact (52) and a noncontact location at which the movable contact (53) is apart from the stationary contact (52). When the movable contact (53) moves to the contact location, a movable contact point (53a) of the movable contact (53) is in contact with a stationary contact point (52a) of the stationary contact (52).

Further, the breaker (50) includes a linkage mechanism (58) configured to move the movable contact (53) manually, a trip mechanism (56) configured to separate the movable contact (53) from the stationary contact (52) in the event of abnormal current conditions, and a bias spring (60) configured to bias the movable contact (53) to separate the movable contact (53) from the stationary contact (52). The linkage (58) is attached to the casing such that the movable contact (53) can be moved between the contact location and the noncontact location by operation of a manual lever (57). The trip mechanism (56) is made of bimetal, and provides connection between the movable contact (53) and the supply terminal (54). The trip mechanism (56) is thermally deformed in the event of overcurrent conditions (abnormal current conditions), and the thermal deformation allows the linkage (58) to move, thereby separating the movable contact (53) from the stationary contact (52). When the movable contact (53) is separated from the stationary contact (52), the breaker (50) cannot be energized.

Furthermore, the breaker (50) includes the above-described cutter (10), and a weld detector (65) configured to detect the welding between the movable contact point (53a) and the stationary contact point (52a). Any one of the cutters (10) of the first embodiment and other embodiments described later may be used as the cutter (10) of the present embodiment.

The cutter (10) is located so as to be able to cut the terminal-to-terminal connection member (51). Specifically, the cutter (10) is located on the back surface (i.e., the lower surface in FIG. 24) of the terminal-to-terminal connection member (51).

The weld detector (65) is connected to, e.g., the terminal-to-terminal connection member (51) to detect whether or not the movable contact point (53a) and the stationary contact point (52a) are welded together based on a current value of the terminal-to-terminal connection member (51). An igniter (37) of the cutter (10) is connected to the weld detector (65). When the weld detector (65) determines that the movable contact point (53a) and the stationary contact point (52a) are welded together, the weld detector (65) actuates the igniter (37).

In the third embodiment, when the weld detector (65) determines that the movable contact point (53a) and the stationary contact point (52a) are welded together, the igniter (37) is actuated to explode an explosive, and the blade (30) moves forward. The blade (30) cuts (i.e., breaks) the terminal-to-terminal connection member (51), and then the pusher (32) stops while being in contact with the cut surfaces of the terminal-to-terminal connection member (51). This allows insulation between the cut surfaces of the terminal-to-terminal connection member (51), thereby disabling the passage of current between the supply terminal (54) and the load terminal (55).

### -Advantages of Third Embodiment-

In the third embodiment, the cutter (10) can forcibly disable the passage of current between the supply terminal (54) and the load terminal (55). Thus, for example, even when the movable contact (53) and the stationary contact (52) are welded together, the cutter (10) can forcibly disable the passage of current between the supply terminal (54) and the load terminal (55) to prevent a breakdown of a load-side device. The other configurations, effects and advantages are the same as those in the first embodiment. Further, the engagement portion of the second embodiment may also be formed.

### <Fourth Embodiment of the Invention>

Now, the fourth embodiment will be described. As shown in FIG. 25, the fourth embodiment is directed to a contactor including a cutter (10) of the present invention. As shown in FIG. 25, the contactor (70) includes a load terminal (75) and a supply terminal (74) provided on a resin casing (86), and a terminal-to-terminal connection member (71) which is a harness (12) configured to connect the load terminal (75) and the supply terminal (74).

The terminal-to-terminal connection member (71) includes a first stationary contact (68) connected to the load terminal (75), a second stationary contact (69) connected to the supply terminal (74), and a movable contact (73) coupled to a movable core (81) described below. The movable contact (73) is movable between the contact location at which the movable contact (73) is in contact with a pair of stationary contacts (68, 69) and a noncontact location at which the movable contact (73) is apart from the pair of stationary contacts (68, 69). When the movable contact (73) moves to the contact location, a movable contact point (73a) at one end of the movable contact (73) comes in contact with the first stationary contact point (68a) of the first stationary contact (68), and a movable contact point (73b) at the other end of the movable contact (73) comes in contact with the second stationary contact point (69a) of the second stationary contact (69).

Further, the contactor (70) includes a transfer mechanism (76) configured to transfer the movable contact (73) between the contact location and the noncontact location. The transfer mechanism (76) includes the movable core (81), a stationary core (82), an exciting coil (83), and a spool (84). The stationary core (82) is fixed to the bottom surface of the casing (86). The movable core (81) faces an upper surface of the stationary core (82). The exciting coil (83) is wound around the spool (84). A pair of return springs (79) are provided between the movable core (81) and the spool (84) to separate the movable core (81) from the stationary core (82) when the contactor (70) is in a non-energized condition.

The transfer mechanism (76) is configured such that when the exciting coil (83) is energized by an external signal, the stationary core (82) is excited to attract the movable core (81). When the movable core (81) is attracted by the stationary core (82), the contactor (70) is in a non-energized condition. By contrast, the transfer mechanism (76) is configured such that when the energization of the exciting coil (83) is stopped by an external signal, the return springs (79) separate the movable core (81) from the stationary core (82). The separation of the movable core (81) from the stationary core (82) allows the contactor (70) to be in an energized condition.

Further, the contactor (70) includes the above-described cutter (10), and a weld detector (65) having a configuration similar to that of the third embodiment. Any one of the cutters (10) of the first embodiment, the second embodiment, and other embodiments described below may be used as the cutter (10) of the present embodiment.

The cutter (10) is located so as to be able to cut the terminal-to-terminal connection member (71). Specifically, the cutter (10) is disposed such that a cutting portion (31) of the blade (30) which has not yet moved forward faces a front surface of the movable contact (73).

In the fourth embodiment, when the weld detector (65) determines that the movable contact points (73a, 73b) are each welded to a corresponding one of the stationary contact points (68a, 69a), the igniter (37) is actuated to explode an explosive, and the blade (30) moves forward. The blade (30) cuts the movable contact (73). In this situation, the pusher (32) is in contact with the cut surfaces of the movable contact (73). In other words, the blade (30) moves forward until the pusher (32) comes in contact with the cut surfaces of the movable contact (73).

### -Advantages of Fourth Embodiment-

In the fourth embodiment, the cutter (10) can forcibly disable the passage of current between the supply terminal (74) and the load terminal (75). Thus, for example, even when the movable contact (73) and the stationary contacts (68, 69) are welded together, the cutter (10) can forcibly disable the passage of current between the supply terminal (74) and the load terminal (75) to prevent a breakdown of a load-side device. The other configurations, effects and advantages are the same as those in the first embodiment. Further, the engagement portion of the second embodiment may also be formed.

### <Fifth Embodiment of the Invention>

Now, the fifth embodiment will be described. As shown in FIG. 26, the fifth embodiment is directed to an electric circuit breaker (90) including a cutter (10) of the present invention. The electric circuit breaker (90) includes a breaker (50), a contactor (70), and a resin casing (91). Descriptions of the breaker (50) and the contactor (70) are omitted.

A breaker placement chamber (88) in which the breaker (50) is placed, and a contactor placement chamber (89) in which the contactor (70) is placed are formed in the casing (91) with a barrier interposed therebetween. The casing (91) includes a load terminal (95), a supply terminal (94), and a connection member (92) providing connection between the breaker (50) and the contactor (70). The connection member (92) is comprised of a harness (12).

The load terminal (95) is connected to the first stationary contact (68) of the contactor (70). The supply terminal (94) is connected to a movable contact (53) of the breaker (50). Further, one end of the connection member (92) is connected to the second stationary contact (69) of the contactor (70). The other end of the connection member (92) is connected to the stationary contact (52) of the breaker (50).

Moreover, the electric circuit breaker (90) includes the above-described cutter (10), and a weld detector (65) similar to that of the third embodiment. Any one of the cutters of the first embodiment, the second embodiment, and other embodiments described later may be used as the cutter (10) of the present embodiment.

The cutter (10) is located so as to be able to cut the connection member (92). Specifically, the cutter (10) is disposed such that a cutting portion (31) of a blade (30) which has not yet moved forward faces a front surface of the connection member (92).

In the fifth embodiment, when the weld detector (65) determines that in the breaker (50), the movable contact (53) and the stationary contact (52) are welded together, or when the weld detector (65) determines that in the contactor (70), the movable contact (73) and the stationary contacts (68, 69) are welded together, the weld detector (65) actuates the igniter (37), and the blade (30) moves forward to cut (i.e., break) the connection member (92). In this situation, the pusher (32) is in contact with the cut surfaces of the connection member (92). In other words, the blade (30) moves forward until the pusher (32) comes in contact with the cut surfaces of the connection member (92).

### -Advantages of Fifth Embodiment-

In the fifth embodiment, the cutter (10) cuts the connection member (92), thereby disabling the passage of current between the supply terminal (94) and the load terminal (95). Thus, for example, even when, in the breaker (50) or the contactor (70), contacts are welded together, the cutter (10) can disable the passage of current between the supply terminal (94) and the load terminal (95) to prevent a breakdown of a load-side device. The other configurations, effects and advantages are the same as those in the first embodiment. Further, the engagement portion of the second embodiment may also be formed.

### <Other Embodiments>

In the first embodiment, the inner surface of the first cylindrical member (25) includes the back side tapered portion (25d) and the front side tapered portion (25e). However, the present invention is not limited to this configuration, and a straight portion may be formed between the back side tapered portion (25d) and the front side tapered portion (25e). Specifically, the inner surface of the first cylindrical member (25) of the present invention may include, from the back side, a back side tapered portion (25d), a straight portion having a constant inner diameter, and a front side tapered portion (25e) having a tilt angle smaller than a tilt angle of the back side tapered portion (25d).

Further, the bottom of the insertion groove (25a, 26a) is not limited to the shape described above, and may have an uneven shape which can reduce slip of the harness (12) at the time of cutting the harness (12).

The cutting portion (31) is not limited to the configuration including two edge portions (31a, 31b) having different heights, and may include only one edge portion.

As explained in each of the embodiments above, the movement preventing portion of the present invention may include both of the strong pressure portion of the first embodiment and the engagement portion of the second embodiment.

### INDUSTRIAL APPLICABILITY

As described above, the present invention is useful as a cutter configured to cut a current-carrying member through which current flows.

### DESCRIPTION OF REFERENCE CHARACTERS

- 10: cutter
- 12: harness (current-carrying member)
- 12c: small hole
- 12d: bent portion
- 12e: thick portion
- 25: first cylindrical member
- 26: second cylindrical member
- 25a: insertion groove
- 26a: insertion groove
- 25c: front side end
- 26c: back side end
- 25d: back side tapered portion (tapered portion)
- 25e: front side tapered portion (tapered portion)
- 25f: straight portion
- 25g: tapered portion
- 25h: projection
- 30: blade
- 31: cutting portion
- 31a: first edge portion (edge portion)
- 31b: second edge portion (edge portion)
- 31c: guide portion
- 32: pusher (pressure receiver)
- 32e: middle tapered portion (tapered portion)
- 32h: straight portion
- 121a: wider portion

## Claims

1. A cutter, comprising:
a first cylindrical member (25) and a second cylindrical member (26) whose axial ends (25c, 26c) face each other and sandwich a current-carrying member (12) in the axial direction,
a blade (30) accommodated in the first cylindrical member (25) so to be slidable in the axial direction, and including a cutting portion (31) on a front side and a pressure receiver (32) on a back side,
a gas generator (35) which generates a high-pressure gas that acts on the pressure receiver (32), thereby making the blade (30) slide forward and cut the current-carrying member (12) with the cutting portion (31), and
a movement preventing portion which prevents movement of the current-carrying member (12) at a time of cutting the current-carrying member (12) with the cutting portion (31).

2. The cutter of claim 1, wherein
the movement preventing portion includes a strong pressure portion that increases a force of sandwiching the current-carrying member (12).

3. The cutter of claim 1, wherein
the movement preventing portion includes an engagement portion due to which the current-carrying member (12) is caught on at least one of the first cylindrical member (25), the second cylindrical member (26), and the blade (30).

4. The cutter of claim 1, wherein
the movement preventing portion includes a strong pressure portion that increases a force of sandwiching the current-carrying member (12), and an engagement portion due to which the current-carrying member (12) is caught on at least one of the first cylindrical member (25), the second cylindrical member (26), and the blade (30).

5. The cutter of claim 2 or 4, wherein
the strong pressure portion includes a tapered portion (25d, 25e, 25g) at which an inner diameter of the first cylindrical member (25) on an inner surface where the pressure receiver (32) slides is reduced from a back side to a front side.

6. The cutter of claim 2 or 4, wherein
at least one of axial ends (25c, 26c) of the first cylindrical member (25) and the second cylindrical member (26), the axial ends (25c, 26c) facing each other, is provided with an insertion groove (25a, 26a) which extends in a radial direction of the cylindrical member (25, 26) and in which the current-carrying member (12) is inserted and sandwiched, and
in the case where the insertion groove (25a, 26a) is formed in one of the axial ends (25c, 26c), the insertion groove (25a, 26a) has a depth smaller than a thickness of the current-carrying member (12), and in the case where the insertion groove (25a, 26a) is formed in both of the axial ends (25c, 26c), a sum of depths of the insertion grooves (25a, 26a) is smaller than a thickness of the current-carrying member (12).

7. The cutter of claim 5 or 6,
the first cylindrical member (25) includes the tapered portion (25d, 25e) from a back end to a front end of the first cylindrical member (25),
the tapered portion (25d, 25e) includes a back side tapered portion (25d) formed on the back side, and a front side tapered portion (25e) continuous to and located forward of the back side tapered portion (25d) and having a tilt angle smaller than a tilt angle of the back side tapered portion (25d), and
the pressure receiver (32) includes a tapered portion (32e) at which an outer diameter of the pressure receiver (32) is reduced from a back side to a front side.

8. The cutter of claim 5 or 6, wherein
the first cylindrical member (25) includes a straight portion (25f) at which the inner diameter of the first cylindrical member (25) is constant on a back side of the inner surface where the pressure receiver (32) slides, and the tapered portion (25g) continuous to and located forward of the straight portion (25f), and
the pressure receiver (32) includes, at a back end thereof, a tapered portion (32g) at which an outer diameter of the pressure receiver (32) is reduced from a back side to a front side, and includes a straight portion (32h) continuous to and located forward of the tapered portion (32g) and having a constant outer diameter that slides on the straight portion (25f) of the first cylindrical member (25).

9. The cutter of claim 2 or 4, wherein
each of the axial ends (25c, 26c) of the first cylindrical member (25) and the second cylindrical member (26) is in an approximately V-shape.

10. The cutter of claim 9, wherein
the current-carrying member (12) is in an approximately V-shape corresponding to the axial ends (25c, 26c) of the first cylindrical member (25) and the second cylindrical member (26).

11. The cutter of claim 3 or 4, wherein
at least one of axial ends (25c, 26c) of the first cylindrical member (25) and the second cylindrical member (26), the axial ends (25c, 26c) facing each other, is provided with an insertion groove (25a, 26a) which extends in a radial direction of the cylindrical member (25, 26) and in which the current-carrying member (12) is inserted and sandwiched, and
the engagement portion includes a wider portion (121a) which is formed in the current-carrying member (12), which extends outward in the radial direction from an outward end of the insertion groove (25a, 26a), and which has a width wider than a width of the insertion groove (25a, 26a).

12. The cutter of claim 3 or 4, wherein
the cutting portion (31) includes
a pair of guide portions (31c) which face each other and protrude to a front side, and between which the current-carrying member (12) is inserted, and whose outer diameter is approximately equal to inner diameters of the first cylindrical member (25) and the second cylindrical member (26), and
an edge portion (31a, 31b) formed between the pair of guide portions (31c) and configured to cut the current-carrying member (12), and
the engagement portion includes a wider portion (121a) which is formed in the current-carrying member (12), which extends outward from an end of each of the guide portions (31c) in a direction along which the current-carrying member (12) passes in between the guide portions (31c), and which has a width wider than a distance between the guide portions (31c).

13. The cutter of claim 3 or 4, wherein
the engagement portion includes
a recess (12c) formed in one of the current-carrying member (12) or the axial end (25c, 26c) of the first cylindrical member (25) or the second cylindrical member (26), and
a projection (25h) provided on the other one of the current-carrying member (12) or the axial end (25c, 26c) of the first cylindrical member (25) or the second cylindrical member (26), and fitted in the recess (12c).

14. The cutter of claim 3 or 4, wherein
the engagement portion includes a bent portion (12d) formed in the current-carrying member (12) and configured to be caught on an outer circumferential surface of the first cylindrical member (25) or the second cylindrical member (26).

15. The cutter of claim 3 or 4, wherein
the engagement portion includes a thick portion (12e) which is formed in the current-carrying member (12), which extends outward in a radial direction of the first cylindrical member (25) from an outward end of the axial end (25c, 26c) of the first cylindrical member (25) or the second cylindrical member (26), and which has a thickness greater than a distance between the first cylindrical member (25) and the second cylindrical member (26).
